# EUROPEAN PATENT APPLICATION

(11) **EP 4 216 605 A1**
(43) Date of publication of application: **26.07.2023**
(21) Application number: 20958267.5
(22) Date of filing: 22.10.2020
(51) Int. Cl.: H04W 36/00

(54) **COMMUNICATION METHOD AND DEVICE**

(71) Applicant: Huawei Technologies Co., Ltd., Shenzhen, Guangdong 518129 (CN)
(72) Inventor: HU, Xingxing, Shenzhen, Guangdong 518129 (CN); GENG, Tingting, Shenzhen, Guangdong 518129 (CN)
(74) Representative: Isarpatent
(86) International application number: PCT/CN2020/123017
(87) International publication number: WO 2022/082685

(57) **Abstract**

This application discloses a communication method and apparatus, and relates to the wireless communication field, to simplify a processing process of a master base station, reduce overheads of the master base station, and shorten time for a terminal to perform conditional primary secondary cell (primary secondary cell, PSCell) change (conditional PSCell change, CPC). The method includes: A master base station sends, to a candidate secondary base station, a first message including an identifier of each candidate PSCell in a first candidate PSCell list and a first identifier corresponding to each candidate PSCell. The master base station receives, from the candidate secondary base station, a second message including an identifier of each candidate PSCell in a second candidate PSCell list, a first identifier corresponding to each candidate PSCell, and radio resource configuration information corresponding to each candidate PSCell, where the first candidate PSCell list includes the second candidate PSCell list. The master base station sends, to a terminal, a third message including the identifier of each candidate PSCell in the second candidate PSCell list, the first identifier corresponding to each candidate PSCell, and the radio resource configuration information corresponding to each candidate PSCell.

## Description

### TECHNICAL FIELD

This application relates to the wireless communication field, and in particular, to a communication method and apparatus.

### BACKGROUND

In the field of wireless communication technologies, a dual connectivity (dual connectivity, DC) technology is introduced to improve throughput of a user. DC can support two or more base stations in simultaneously providing data transmission services for one terminal. These base stations include one master base station and one or more secondary base stations. The master base station may establish a radio resource control (radio resource control, RRC) connection to the terminal, and may transmit an RRC message to the terminal. The master base station further establishes a control plane connection to a core network. Some RRC messages may be transmitted between the secondary base station and the terminal, and the some RRC messages include measurement configuration information used to measure signal quality of a cell, a measurement report, or the like.

After establishing the RRC connection to the master base station, the terminal may perform conditional primary secondary cell (primary secondary cell, PSCell) addition (conditional PSCell addition, CPA), to establish a connection to the secondary base station. After establishing the connections to both the master base station and the secondary base station, the terminal may further perform conditional PSCell change (conditional PSCell change, CPC), to change a PSCell connected to the terminal. In a process in which the terminal performs CPC, the master base station determines a change condition of a candidate PSCell, and the master base station further receives configuration information of the candidate PSCell from a candidate secondary base station, and determines the change condition of the candidate PSCell and the configuration information of the candidate PSCell that are sent to the terminal. A processing process is complex.

### SUMMARY

This application provides a communication method and apparatus, to simplify a processing process of a master base station, reduce overheads of the master base station, and shorten time for a terminal to perform CPC.

To achieve the foregoing objective, the following technical solutions are used in embodiments of this application.

According to a first aspect, an embodiment of this application provides a communication method. The method includes: A master base station sends a first message to a candidate secondary base station, where the first message includes an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier. The master base station receives a second message from the candidate secondary base station, where the second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list. The master base station sends a third message to the terminal, where the third message includes the identifier of each candidate PSCell in the second candidate PSCell list, the first identifier corresponding to each candidate PSCell, and the radio resource configuration information corresponding to each candidate PSCell.

According to the method provided in the first aspect, the master base station does not need to store related information (for example, the identifier of each candidate PSCell in the first candidate PSCell list and/or the first identifier corresponding to each candidate PSCell) corresponding to a candidate PSCell in a first message, to reduce storage overheads of the master base station. The master base station does not need to associate a first identifier corresponding to a candidate PSCell in the second candidate PSCell list with radio resource configuration information corresponding to the candidate PSCell based on an identifier of the candidate PSCell, to simplify a processing process of the master base station, reduce overheads of the master base station, and shorten time for the terminal to perform CPC. In addition, the candidate PSCell in the second candidate PSCell list is selected from the first candidate PSCell list for processing. After receiving the second message, the master base station includes all or a part of content in the second message in the third message and sends the third message to the terminal, so that a problem that radio resource configuration information corresponding to a candidate PSCell cannot be determined does not occur.

In a possible implementation, the first identifier includes a measurement identifier and/or a conditional reconfiguration identifier. According to the foregoing method, the measurement identifier and/or the conditional reconfiguration identifier may indicate the condition for changing the PSCell currently connected to the terminal to the candidate PSCell corresponding to the first identifier.

In a possible implementation, the method further includes: The master base station receives a fourth message from a source secondary base station. The fourth message includes the identifier of each candidate PSCell in the first candidate PSCell list and the first identifier corresponding to each candidate PSCell, and the first candidate PSCell list includes at least one candidate PSCell configured by the source secondary base station for the terminal. According to the foregoing method, the master base station does not need to store related information (for example, the identifier of each candidate PSCell in the first candidate PSCell list and/or the first identifier corresponding to each candidate PSCell) corresponding to a candidate PSCell in the fourth message, to reduce storage overheads of the master base station. The master base station does not need to associate a first identifier corresponding to a candidate PSCell in the second candidate PSCell list with radio resource configuration information corresponding to the candidate PSCell based on an identifier of the candidate PSCell, to simplify a processing process of the master base station, reduce overheads of the master base station, and shorten time for the terminal to perform CPC. In addition, the candidate PSCell in the second candidate PSCell list is selected from the first candidate PSCell list for processing. After receiving the second message, the master base station includes all or a part of content in the second message in the third message and sends the third message to the terminal, so that a problem that radio resource configuration information or a measurement identifier corresponding to a candidate PSCell cannot be determined does not occur.

In a possible implementation, the third message further includes first indication information, and the first indication information indicates that conditional PSCell change is triggered by the source secondary base station. According to the foregoing method, the terminal may determine that the conditional PSCell change is triggered by the source secondary base station. In this case, the terminal may determine a measurement object configuration based on the measurement identifier and a correspondence that is between the measurement identifier and the measurement object configuration and that is determined by the source secondary base station, and determine a measurement reporting configuration based on the measurement identifier and a correspondence that is between the measurement identifier and the measurement reporting configuration and that is determined by the source secondary base station.

In a possible implementation, the first candidate PSCell list includes at least one candidate PSCell configured by the master base station for the terminal, and the first identifier is determined by the master base station. According to the foregoing method, when the master base station triggers conditional PSCell change, the master base station may configure the at least one candidate PSCell and the first identifier for the terminal.

In a possible implementation, the third message further includes second indication information, and the second indication information indicates that the conditional PSCell change is triggered by the master base station. According to the foregoing method, the terminal may determine that the conditional PSCell change is triggered by the master base station. In this case, the terminal may determine a measurement object configuration based on the measurement identifier and a correspondence that is between the measurement identifier and the measurement object configuration and that is determined by the master base station, and determine a measurement reporting configuration based on the measurement identifier and a correspondence that is between the measurement identifier and the measurement reporting configuration and that is determined by the master base station.

In a possible implementation, the method further includes: The master base station receives a fifth message from the terminal, where the fifth message indicates, to the master base station, that the terminal receives the third message. The master base station sends a sixth message to a first secondary base station based on the fifth message, where the sixth message indicates that the terminal receives the third message, and the first secondary base station includes at least one of the source secondary base station and the candidate secondary base station. According to the foregoing method, the master base station may receive the fifth message from the terminal, where the fifth message does not include a message sent by the terminal to the first secondary base station. The master base station may send the sixth message to the first secondary base station based on the fifth message, so that the first secondary base station determines that the terminal receives the third message.

According to a second aspect, an embodiment of this application provides a communication method. The method includes: A candidate secondary base station receives a first message from a master base station, where the first message includes an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier. The candidate secondary base station sends a second message to the master base station based on the first message, where the second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

According to the method provided in the second aspect, after receiving the first message from the master base station, the candidate secondary base station may select a candidate PSCell (that is, a candidate PSCell in the second candidate PSCell list) from the first candidate PSCell list, and send the second message to the master base station. The master base station does not need to store related information (for example, the identifier of each candidate PSCell in the first candidate PSCell list and/or the first identifier corresponding to each candidate PSCell) corresponding to a candidate PSCell in the first message, to reduce storage overheads of the master base station. The master base station does not need to associate a first identifier corresponding to a candidate PSCell in the second candidate PSCell list with radio resource configuration information corresponding to the candidate PSCell based on an identifier of the candidate PSCell, to simplify a processing process of the master base station, reduce overheads of the master base station, and shorten time for the terminal to perform CPC. In addition, the candidate PSCell in the second candidate PSCell list is selected from the first candidate PSCell list for processing. After receiving the second message, the master base station includes all or a part of content in the second message in the third message and sends the third message to the terminal, so that a problem that radio resource configuration information corresponding to a candidate PSCell cannot be determined does not occur.

In a possible implementation, the first identifier includes a measurement identifier and/or a conditional reconfiguration identifier. According to the foregoing method, the measurement identifier and/or the conditional reconfiguration identifier may indicate the condition for changing the PSCell currently connected to the terminal to the candidate PSCell corresponding to the first identifier.

In a possible implementation, the method further includes: The candidate secondary base station receives a sixth message from the master base station, where the sixth message indicates that the terminal receives a third message, the third message is a message sent by the master base station to the terminal, and the third message includes the identifier of each candidate PSCell in the second candidate PSCell list, the first identifier corresponding to each candidate PSCell, and the radio resource configuration information corresponding to each candidate PSCell. According to the foregoing method, the candidate secondary base station may determine, based on the sixth message, that the terminal receives the third message.

According to a third aspect, an embodiment of this application provides a communication method. The method includes: A source secondary base station determines a fourth message, where the fourth message includes an identifier of each candidate primary secondary cell PSCell in a first candidate PSCell list and a first identifier corresponding to each candidate PSCell, the first candidate PSCell list includes at least one candidate PSCell configured by the source secondary base station for a terminal, and the first identifier indicates a condition for changing a PSCell currently connected to the terminal to a candidate PSCell corresponding to the first identifier. The source secondary base station sends the fourth message to a master base station.

According to the method provided in the third aspect, when determining that conditional PSCell change is triggered, the source secondary base station may send the fourth message to the master base station, so that the master base station sends a first message to a candidate secondary base station based on the fourth message. In this case, the candidate secondary base station may select a candidate PSCell (that is, a candidate PSCell in a second candidate PSCell list) from the first candidate PSCell list, and send a second message to the master base station. In this way, the master base station does not need to store related information (for example, the identifier of each candidate PSCell in the first candidate PSCell list and/or the first identifier corresponding to each candidate PSCell) corresponding to a candidate PSCell in the fourth message, to reduce storage overheads of the master base station. The master base station does not need to associate a first identifier corresponding to a candidate PSCell in the second candidate PSCell list with radio resource configuration information corresponding to the candidate PSCell based on an identifier of the candidate PSCell, to simplify a processing process of the master base station, reduce overheads of the master base station, and shorten time for the terminal to perform CPC. In addition, candidate PSCells in the second candidate PSCell list are selected from the first candidate PSCell list for processing. After receiving the second message, the master base station includes all or a part of content in the second message in a third message and sends the third message to the terminal, so that a problem that radio resource configuration information corresponding to a candidate PSCell cannot be determined does not occur.

In a possible implementation, the first identifier includes a measurement identifier and/or a conditional reconfiguration identifier. According to the foregoing method, the measurement identifier and/or the conditional reconfiguration identifier may indicate the condition for changing the PSCell currently connected to the terminal to the candidate PSCell corresponding to the first identifier.

In a possible implementation, the fourth message further includes first indication information, and the first indication information indicates that conditional PSCell change is triggered by the source secondary base station. According to the foregoing method, the master base station may determine that the conditional PSCell change is triggered by the source secondary base station.

In a possible implementation, the method further includes: The source secondary base station receives a sixth message from the master base station, where the sixth message indicates that the terminal receives a third message, the third message is a message sent by the master base station to the terminal, the third message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list. According to the foregoing method, the source secondary base station may determine that the terminal receives the third message.

According to a fourth aspect, an embodiment of this application provides a communication method. The method includes: A terminal receives a third message from a master base station. The third message includes an identifier of each candidate primary secondary cell PSCell in a second candidate PSCell list, a first identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source secondary base station or the master base station for the terminal. The first identifier indicates a condition under which a PSCell currently connected to the terminal is a candidate PSCell corresponding to the first identifier. The source secondary base station is a secondary base station currently connected to the terminal. The first indication information indicates that conditional PSCell change is triggered by the source secondary base station, or indicates that conditional PSCell change is triggered by the master base station. The terminal performs conditional PSCell change based on the third message.

According to the method provided in the fourth aspect, the terminal may determine, based on the third message, whether the conditional PSCell change is triggered by the master base station or the source secondary base station, and then may perform the conditional PSCell change based on the third message.

In a possible implementation, the first identifier includes a measurement identifier and/or a conditional reconfiguration identifier. According to the foregoing method, the measurement identifier and/or the conditional reconfiguration identifier may indicate the condition for changing the PSCell currently connected to the terminal to the candidate PSCell corresponding to the first identifier.

In a possible implementation, the method further includes: The terminal sends a fifth message to the master base station. The fifth message indicates, to the master base station, that the terminal receives the third message. According to the foregoing method, the master base station may determine that the terminal receives the third message, and then the master base station may send, to a first secondary base station based on the third message, a sixth message indicating that the terminal receives the third message.

According to a fifth aspect, an embodiment of this application provides a communication apparatus. The communication apparatus includes a transceiver module. The transceiver module is configured to send a first message to a candidate secondary base station. The first message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier. The transceiver module is further configured to receive a second message from the candidate secondary base station. The second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list. The transceiver module is further configured to send a third message to the terminal. The third message includes the identifier of each candidate PSCell in the second candidate PSCell list, the first identifier corresponding to each candidate PSCell, and the radio resource configuration information corresponding to each candidate PSCell.

In a possible implementation, the first identifier includes a measurement identifier and/or a conditional reconfiguration identifier.

In a possible implementation, the transceiver module is further configured to receive a fourth message from a source secondary base station. The fourth message includes the identifier of each candidate PSCell in the first candidate PSCell list and the first identifier corresponding to each candidate PSCell, and the first candidate PSCell list includes at least one candidate PSCell configured by the source secondary base station for the terminal.

In a possible implementation, the third message further includes first indication information, and the first indication information indicates that conditional PSCell change is triggered by the source secondary base station.

In a possible implementation, the first candidate PSCell list includes at least one candidate PSCell configured by the communication apparatus for the terminal, and the first identifier is determined by the communication apparatus.

In a possible implementation, the third message further includes second indication information, and the second indication information indicates that the conditional PSCell change is triggered by the communication apparatus.

In a possible implementation, the transceiver module is further configured to receive a fifth message from the terminal. The fifth message indicates, to the communication apparatus, that the terminal receives the third message. The transceiver module is further configured to send a sixth message to a first secondary base station based on the fifth message. The sixth message indicates that the terminal receives the third message, and the first secondary base station includes at least one of the source secondary base station and the candidate secondary base station.

According to a sixth aspect, an embodiment of this application provides a communication apparatus. The communication apparatus includes a transceiver module. The transceiver module is configured to receive a first message from a master base station. The first message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier. The transceiver module is further configured to send a second message to the master base station based on the first message. The second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

In a possible implementation, the first identifier includes a measurement identifier and/or a conditional reconfiguration identifier.

In a possible implementation, the transceiver module is further configured to receive a sixth message from the master base station. The sixth message indicates that the terminal receives a third message, the third message is a message sent by the master base station to the terminal, and the third message includes the identifier of each candidate PSCell in the second candidate PSCell list, the first identifier corresponding to each candidate PSCell, and the radio resource configuration information corresponding to each candidate PSCell.

According to a seventh aspect, an embodiment of this application provides a communication apparatus. The communication apparatus includes a processing module and a transceiver module. The processing module is configured to determine a fourth message. The fourth message includes an identifier of each candidate PSCell in a first candidate PSCell list and a first identifier corresponding to each candidate PSCell, the first candidate PSCell list includes at least one candidate PSCell configured by the communication apparatus for a terminal, and the first identifier indicates a condition for changing a PSCell currently connected to the terminal to a candidate PSCell corresponding to the first identifier. The transceiver module is configured to send the fourth message to a master base station.

In a possible implementation, the first identifier includes a measurement identifier and/or a conditional reconfiguration identifier.

In a possible implementation, the fourth message further includes first indication information, and the first indication information indicates that conditional PSCell change is triggered by the communication apparatus.

In a possible implementation, the transceiver module is further configured to receive a sixth message from the master base station. The sixth message indicates that the terminal receives a third message, the third message is a message sent by the master base station to the terminal, the third message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

According to an eighth aspect, an embodiment of this application provides a communication apparatus. The communication apparatus includes a transceiver module and a processing module. The transceiver module is configured to receive a third message from a master base station. The third message includes an identifier of each candidate PSCell in a second candidate PSCell list, a first identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source secondary base station or the master base station for the communication apparatus. The first identifier indicates a condition under which a PSCell currently connected to the communication apparatus is a candidate PSCell corresponding to the first identifier. The source secondary base station is a secondary base station currently connected to the communication apparatus. The first indication information indicates that conditional PSCell change is triggered by the source secondary base station, or indicates that conditional PSCell change is triggered by the master base station. The processing module is configured to perform conditional PSCell change based on the third message.

In a possible implementation, the first identifier includes a measurement identifier and/or a conditional reconfiguration identifier.

In a possible implementation, the transceiver module is further configured to send a fifth message to the master base station. The fifth message indicates, to the master base station, that the communication apparatus receives the third message.

According to a ninth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the first aspect or the possible implementations of the first aspect.

According to a tenth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the second aspect or the possible implementations of the second aspect.

According to an eleventh aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the third aspect or the possible implementations of the third aspect.

According to a twelfth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the fourth aspect or the possible implementations of the fourth aspect.

According to a thirteenth aspect, an embodiment of this application provides a computer-readable medium. The computer-readable medium stores a computer program or instructions, and when the computer program or the instructions are executed, a computer is enabled to perform the method according to any one of the first aspect or the possible implementations of the first aspect.

According to a fourteenth aspect, an embodiment of this application provides a computer-readable medium. The computer-readable medium stores a computer program or instructions, and when the computer program or the instructions are executed, a computer is enabled to perform the method according to any one of the second aspect or the possible implementations of the second aspect.

According to a fifteenth aspect, an embodiment of this application provides a computer-readable medium. The computer-readable medium stores a computer program or instructions, and when the computer program or the instructions are executed, a computer is enabled to perform the method according to any one of the third aspect or the possible implementations of the third aspect.

According to a sixteenth aspect, an embodiment of this application provides a computer-readable medium. The computer-readable medium stores a computer program or instructions, and when the computer program or the instructions are executed, a computer is enabled to perform the method according to any one of the fourth aspect or the possible implementations of the fourth aspect.

According to a seventeenth aspect, an embodiment of this application provides a computer program product, including computer program code, and when the computer program code is run on a computer, the computer is enabled to perform the method according to any one of the first aspect or the possible implementations of the first aspect.

According to an eighteenth aspect, an embodiment of this application provides a computer program product, including computer program code, and when the computer program code is run on a computer, the computer is enabled to perform the method according to any one of the second aspect or the possible implementations of the second aspect.

According to a nineteenth aspect, an embodiment of this application provides a computer program product, including computer program code, and when the computer program code is run on a computer, the computer is enabled to perform the method according to any one of the third aspect or the possible implementations of the third aspect.

According to a twentieth aspect, an embodiment of this application provides a computer program product, including computer program code, and when the computer program code is run on a computer, the computer is enabled to perform the method according to any one of the fourth aspect or the possible implementations of the fourth aspect.

According to a twenty-first aspect, an embodiment of this application provides a chip, including a processor. The processor is coupled to a memory, the memory is configured to store a program or instructions, and when the program or the instructions are executed by the processor, the chip is enabled to implement the method according to any one of the first aspect or the possible implementations of the first aspect.

According to a twenty-second aspect, an embodiment of this application provides a chip, including a processor. The processor is coupled to a memory, the memory is configured to store a program or instructions, and when the program or the instructions are executed by the processor, the chip is enabled to implement the method according to any one of the second aspect or the possible implementations of the second aspect.

According to a twenty-third aspect, an embodiment of this application provides a chip, including a processor. The processor is coupled to a memory, the memory is configured to store a program or instructions, and when the program or the instructions are executed by the processor, the chip is enabled to implement the method according to any one of the third aspect or the possible implementations of the third aspect.

According to a twenty-fourth aspect, an embodiment of this application provides a chip, including a processor. The processor is coupled to a memory, the memory is configured to store a program or instructions, and when the program or the instructions are executed by the processor, the chip is enabled to implement the method according to any one of the fourth aspect or the possible implementations of the fourth aspect.

According to a twenty-fifth aspect, an embodiment of this application provides a communication system. The system includes the apparatus according to the fifth aspect, and/or the apparatus according to the sixth aspect, and/or the apparatus according to the seventh aspect, and/or the apparatus according to the eighth aspect; or the system includes the apparatus according to the ninth aspect, and/or the apparatus according to the tenth aspect, and/or the apparatus according to the eleventh aspect, and/or the apparatus according to the twelfth aspect.

It may be understood that any communication apparatus, chip, computer-readable medium, computer program product, communication system, or the like provided above is configured to perform a corresponding method provided above. Therefore, for beneficial effects that can be achieved by the communication apparatus, the chip, the computer-readable medium, the computer program product, the communication system, or the like, refer to the beneficial effects in the corresponding method. Details are not described herein again.

According to a twenty-sixth aspect, an embodiment of this application provides a communication method. The method includes: A master base station sends a first message to a candidate secondary base station, where the first message includes an identifier of each candidate primary secondary cell PSCell in a first candidate PSCell list and a measurement identifier corresponding to each candidate PSCell. The master base station receives a second message from the candidate secondary base station, where the second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list. The master base station sends a third message to the terminal, where the third message includes the first information.

According to the method provided in the twenty-sixth aspect, the master base station does not need to store related information (for example, the identifier of each candidate PSCell in the first candidate PSCell list and/or the measurement identifier corresponding to each candidate PSCell) corresponding to a candidate PSCell in the first message, to reduce storage overheads of the master base station. After receiving the second message, the master base station does not perceive the second message, but includes the first information in the second message in the third message and sends the third message to the terminal, and does not need to associate, based on an identifier of a candidate PSCell in the second candidate PSCell list, a measurement identifier corresponding to the candidate PSCell with radio resource configuration information corresponding to the candidate PSCell, to simplify a processing process of the master base station, reduce overheads of the master base station, and shorten time for the terminal to perform CPC. In addition, a problem that the master base station cannot determine the radio resource configuration information corresponding to the candidate PSCell does not occur.

In a possible implementation, the method further includes: The master base station receives a fourth message from a source secondary base station. The fourth message includes the identifier of each candidate PSCell in the first candidate PSCell list and the measurement identifier corresponding to each candidate PSCell, and the first candidate PSCell list includes at least one candidate PSCell configured by the source secondary base station for the terminal. According to the foregoing method, the master base station does not need to store related information (for example, the identifier of each candidate PSCell in the first candidate PSCell list and/or the measurement identifier corresponding to each candidate PSCell) corresponding to a candidate PSCell in the fourth message, to reduce storage overheads of the master base station. After receiving the second message, the master base station does not perceive the second message, but includes the first information in the second message in the third message and sends the third message to the terminal, and does not need to associate, based on an identifier of a candidate PSCell in the second candidate PSCell list, a measurement identifier corresponding to the candidate PSCell with radio resource configuration information corresponding to the candidate PSCell, to simplify a processing process of the master base station, reduce overheads of the master base station, and shorten time for the terminal to perform CPC. In addition, a problem that the master base station cannot determine the radio resource configuration information corresponding to the candidate PSCell does not occur.

In a possible implementation, the first message further includes a conditional reconfiguration identifier corresponding to each candidate PSCell in the first candidate PSCell list, and the fourth message further includes the conditional reconfiguration identifier corresponding to each candidate PSCell in the first candidate PSCell list. According to the foregoing method, the first message and the fourth message may further carry the conditional reconfiguration identifier, to subsequently modify a change condition corresponding to the candidate PSCell and/or radio resource configuration information corresponding to the candidate PSCell.

In a possible implementation, the third message further includes first indication information, and the first indication information indicates that conditional PSCell change is triggered by the source secondary base station. According to the foregoing method, the terminal may determine that the conditional PSCell change is triggered by the source secondary base station. In this case, the terminal may determine a measurement object configuration based on the measurement identifier and a correspondence that is between the measurement identifier and the measurement object configuration and that is determined by the source secondary base station, and determine a measurement reporting configuration based on the measurement identifier and a correspondence that is between the measurement identifier and the measurement reporting configuration and that is determined by the source secondary base station.

In a possible implementation, the first candidate PSCell list includes at least one candidate PSCell configured by the master base station for the terminal, and the measurement identifier is determined by the master base station. According to the foregoing method, when the master base station triggers the conditional PSCell change, the master base station may configure the at least one candidate PSCell and the measurement identifier for the terminal.

In a possible implementation, the third message further includes second indication information, and the second indication information indicates that the conditional PSCell change is triggered by the master base station. According to the foregoing method, the terminal may determine that the conditional PSCell change is triggered by the master base station. In this case, the terminal may determine a measurement object configuration based on the measurement identifier and a correspondence that is between the measurement identifier and the measurement object configuration and that is determined by the master base station, and determine a measurement reporting configuration based on the measurement identifier and a correspondence that is between the measurement identifier and the measurement reporting configuration and that is determined by the master base station.

In a possible implementation, the method further includes: The master base station receives a fifth message from the terminal, where the fifth message indicates, to the master base station, that the terminal receives the third message. The master base station sends a sixth message to a first secondary base station based on the fifth message, where the sixth message indicates that the terminal receives the third message, and the first secondary base station includes at least one of the source secondary base station and the candidate secondary base station. According to the foregoing method, the master base station may receive the fifth message from the terminal, where the fifth message does not include a message sent by the terminal to the first secondary base station. The master base station may send the sixth message to the first secondary base station based on the fifth message, so that the first secondary base station determines that the terminal receives the third message.

According to a twenty-seventh aspect, an embodiment of this application provides a communication method. The method includes: A candidate secondary base station receives a first message from a master base station, where the first message includes an identifier of each candidate primary secondary cell PSCell in a first candidate PSCell list and a measurement identifier corresponding to each candidate PSCell. The candidate secondary base station sends a second message to the master base station based on the first message, where the second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

According to the method provided in the twenty-seventh aspect, after receiving the first message from the master base station, the candidate secondary base station may select a candidate PSCell (that is, a candidate PSCell in the second candidate PSCell list) from the first candidate PSCell list, and send the second message to the master base station. In this case, the master base station does not need to store related information (for example, the identifier of each candidate PSCell in the first candidate PSCell list and/or the measurement identifier corresponding to each candidate PSCell) corresponding to a candidate PSCell in the first message, to reduce storage overheads of the master base station. After receiving the second message, the master base station does not perceive the second message, but includes the first information in the second message in a third message and sends the third message to the terminal, and does not need to associate, based on an identifier of a candidate PSCell in the second candidate PSCell list, a measurement identifier corresponding to the candidate PSCell with radio resource configuration information corresponding to the candidate PSCell, to simplify a processing process of the master base station, reduce overheads of the master base station, and shorten time for the terminal to perform CPC. In addition, a problem that the master base station cannot determine the radio resource configuration information corresponding to the candidate PSCell does not occur.

In a possible implementation, the first message further includes a conditional reconfiguration identifier corresponding to each candidate PSCell in the first candidate PSCell list. According to the foregoing method, the first message may further carry the conditional reconfiguration identifier, to subsequently modify a change condition corresponding to the candidate PSCell and/or radio resource configuration information corresponding to the candidate PSCell.

In a possible implementation, the method further includes: The candidate secondary base station receives a sixth message from the master base station, where the sixth message indicates that the terminal receives a third message, the third message is a message sent by the master base station to the terminal, and the third message includes the first information. According to the foregoing method, the candidate secondary base station may determine, based on the sixth message, that the terminal receives the third message.

According to a twenty-eighth aspect, an embodiment of this application provides a communication method. The method includes: A source secondary base station determines a fourth message, where the fourth message includes an identifier of each candidate primary secondary cell PSCell in a first candidate PSCell list and a measurement identifier corresponding to each candidate PSCell, and the first candidate PSCell list includes at least one candidate PSCell configured by the source secondary base station for a terminal. The source secondary base station sends the fourth message to a master base station.

According to the method provided in the twenty-eighth aspect, when determining that conditional PSCell change is triggered, the source secondary base station may send the fourth message to the master base station, so that the master base station sends a first message to a candidate secondary base station based on the fourth message. In this case, the candidate secondary base station may select a candidate PSCell (that is, a candidate PSCell in a second candidate PSCell list) from the first candidate PSCell list, and send a second message to the master base station. In this case, the master base station does not need to store related information (for example, the identifier of each candidate PSCell in the first candidate PSCell list and/or the measurement identifier corresponding to each candidate PSCell) corresponding to a candidate PSCell in the fourth message, to reduce storage overheads of the master base station. After receiving the second message, the master base station does not perceive the second message, but includes first information in the second message in a third message and sends the third message to the terminal, and does not need to associate, based on an identifier of a candidate PSCell in the second candidate PSCell list, a measurement identifier corresponding to the candidate PSCell with radio resource configuration information corresponding to the candidate PSCell, to simplify a processing process of the master base station, reduce overheads of the master base station, and shorten time for the terminal to perform CPC. In addition, a problem that the master base station cannot determine the radio resource configuration information corresponding to the candidate PSCell does not occur.

In a possible implementation, the fourth message further includes a conditional reconfiguration identifier corresponding to each candidate PSCell in the first candidate PSCell list. According to the foregoing method, the fourth message may further carry the conditional reconfiguration identifier, to subsequently modify a change condition corresponding to the candidate PSCell and/or radio resource configuration information corresponding to the candidate PSCell.

In a possible implementation, the fourth message further includes first indication information, and the first indication information indicates that conditional PSCell change is triggered by the source secondary base station. According to the foregoing method, the master base station may determine that the conditional PSCell change is triggered by the source secondary base station.

In a possible implementation, the method further includes: The source secondary base station receives a sixth message from the master base station, where the sixth message indicates that the terminal receives a third message, the third message is a message sent by the master base station to the terminal, the third message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list. According to the foregoing method, the source secondary base station may determine that the terminal receives the third message.

According to a twenty-ninth aspect, an embodiment of this application provides a communication method. The method includes: A terminal receives a third message from a master base station. The third message includes first information, the first information includes an identifier of each candidate primary secondary cell PSCell in a second candidate PSCell list, a measurement identifier corresponding to each candidate PSCell, a conditional reconfiguration identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source secondary base station or the master base station for the terminal. The source secondary base station is a secondary base station currently connected to the terminal. The first indication information indicates that conditional PSCell change is triggered by the source secondary base station, or indicates that conditional PSCell change is triggered by the master base station. The terminal performs conditional PSCell change based on the third message.

According to the method provided in the twenty-ninth aspect, the terminal may determine, based on the third message, whether the conditional PSCell change is triggered by the master base station or the source secondary base station, and may perform the conditional PSCell change based on the third message.

In a possible implementation, the method further includes: The terminal sends a fifth message to the master base station, where the fifth message indicates, to the master base station, that the terminal receives the third message. According to the foregoing method, the master base station may determine that the terminal receives the third message, and then the master base station may send, to a first secondary base station based on the third message, a sixth message indicating that the terminal receives the third message.

According to a thirtieth aspect, an embodiment of this application provides a communication apparatus. The communication apparatus includes a transceiver module. The transceiver module is configured to send a first message to a candidate secondary base station. The first message includes an identifier of each candidate PSCell in a first candidate PSCell list and a measurement identifier corresponding to each candidate PSCell. The transceiver module is configured to receive a second message from the candidate secondary base station. The second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list. The transceiver module is configured to send a third message to the terminal. The third message includes the first information.

In a possible implementation, the transceiver module is further configured to receive a fourth message from a source secondary base station. The fourth message includes the identifier of each candidate PSCell in the first candidate PSCell list and the measurement identifier corresponding to each candidate PSCell, and the first candidate PSCell list includes at least one candidate PSCell configured by the source secondary base station for the terminal.

In a possible implementation, the first message further includes a conditional reconfiguration identifier corresponding to each candidate PSCell in the first candidate PSCell list, and the fourth message further includes the conditional reconfiguration identifier corresponding to each candidate PSCell in the first candidate PSCell list.

In a possible implementation, the third message further includes first indication information, and the first indication information indicates that conditional PSCell change is triggered by the source secondary base station.

In a possible implementation, the first candidate PSCell list includes at least one candidate PSCell configured by the communication apparatus for the terminal, and the measurement identifier is determined by the communication apparatus.

In a possible implementation, the third message further includes second indication information, and the second indication information indicates that the conditional PSCell change is triggered by the communication apparatus.

In a possible implementation, the transceiver module is further configured to receive a fifth message from the terminal. The fifth message indicates, to the communication apparatus, that the terminal receives the third message. The transceiver module is further configured to send a sixth message to a first secondary base station based on the fifth message. The sixth message indicates that the terminal receives the third message, and the first secondary base station includes at least one of the source secondary base station and the candidate secondary base station.

According to a thirty-first aspect, an embodiment of this application provides a communication apparatus. The communication apparatus includes a transceiver module. The transceiver module is configured to receive a first message from a master base station. The first message includes an identifier of each candidate PSCell in a first candidate PSCell list and a measurement identifier corresponding to each candidate PSCell. The transceiver module is further configured to send a second message to the master base station based on the first message. The second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

In a possible implementation, the first message further includes a conditional reconfiguration identifier corresponding to each candidate PSCell in the first candidate PSCell list.

In a possible implementation, the transceiver module is further configured to receive a sixth message from the master base station. The sixth message indicates that the terminal receives a third message, the third message is a message sent by the master base station to the terminal, and the third message includes the first information.

According to a thirty-second aspect, an embodiment of this application provides a communication apparatus. The communication apparatus includes a processing module and a transceiver module. The processing module is configured to determine a fourth message. The fourth message includes an identifier of each candidate PSCell in a first candidate PSCell list and a measurement identifier corresponding to each candidate PSCell, and the first candidate PSCell list includes at least one candidate PSCell configured by the communication apparatus for a terminal. The transceiver module is configured to send the fourth message to a master base station.

In a possible implementation, the fourth message further includes a conditional reconfiguration identifier corresponding to each candidate PSCell in the first candidate PSCell list.

In a possible implementation, the fourth message further includes first indication information, and the first indication information indicates that conditional PSCell change is triggered by the communication apparatus.

In a possible implementation, the transceiver module is further configured to receive a sixth message from the master base station. The sixth message indicates that the terminal receives a third message, the third message is a message sent by the master base station to the terminal, the third message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

According to a thirty-third aspect, an embodiment of this application provides a communication apparatus. The communication apparatus includes a transceiver module and a processing module. The transceiver module is configured to receive a third message from a master base station. The third message includes first information, the first information includes an identifier of each candidate primary secondary cell PSCell in a second candidate PSCell list, a measurement identifier corresponding to each candidate PSCell, a conditional reconfiguration identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source secondary base station or the master base station for the communication apparatus. The source secondary base station is a secondary base station currently connected to the communication apparatus. The first indication information indicates that conditional PSCell change is triggered by the source secondary base station, or indicates that conditional PSCell change is triggered by the master base station. The processing module is configured to perform conditional PSCell change based on the third message.

In a possible implementation, the transceiver module is further configured to send a fifth message to the master base station. The fifth message indicates, to the master base station, that the communication apparatus receives the third message.

According to a thirty-fourth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the twenty-sixth aspect or the possible implementations of the twenty-sixth aspect.

According to a thirty-fifth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the twenty-seventh aspect or the possible implementations of the twenty-seventh aspect.

According to a thirty-sixth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the twenty-eighth aspect or the possible implementations of the twenty-eighth aspect.

According to a thirty-seventh aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the twenty-ninth aspect or the possible implementations of the twenty-ninth aspect.

According to a thirty-eighth aspect, an embodiment of this application provides a computer-readable medium. The computer-readable medium stores a computer program or instructions, and when the computer program or the instructions are executed, a computer is enabled to perform the method according to any one of the twenty-sixth aspect or the possible implementations of the twenty-sixth aspect.

According to a thirty-ninth aspect, an embodiment of this application provides a computer-readable medium. The computer-readable medium stores a computer program or instructions, and when the computer program or the instructions are executed, a computer is enabled to perform the method according to any one of the twenty-seventh aspect or the possible implementations of the twenty-seventh aspect.

According to a fortieth aspect, an embodiment of this application provides a computer-readable medium. The computer-readable medium stores a computer program or instructions, and when the computer program or the instructions are executed, a computer is enabled to perform the method according to any one of the twenty-eighth aspect or the possible implementations of the twenty-eighth aspect.

According to a forty-first aspect, an embodiment of this application provides a computer-readable medium. The computer-readable medium stores a computer program or instructions, and when the computer program or the instructions are executed, a computer is enabled to perform the method according to any one of the twenty-ninth aspect or the possible implementations of the twenty-ninth aspect.

According to a forty-second aspect, an embodiment of this application provides a computer program product, including computer program code, and when the computer program code is run on a computer, the computer is enabled to perform the method according to any one of the twenty-sixth aspect or the possible implementations of the twenty-sixth aspect.

According to a forty-third aspect, an embodiment of this application provides a computer program product, including computer program code, and when the computer program code is run on a computer, the computer is enabled to perform the method according to any one of the twenty-seventh aspect or the possible implementations of the twenty-seventh aspect.

According to a forty-fourth aspect, an embodiment of this application provides a computer program product, including computer program code, and when the computer program code is run on a computer, the computer is enabled to perform the method according to any one of the twenty-eighth aspect or the possible implementations of the twenty-eighth aspect.

According to a forty-fifth aspect, an embodiment of this application provides a computer program product, including computer program code, and when the computer program code is run on a computer, the computer is enabled to perform the method according to any one of the twenty-ninth aspect or the possible implementations of the twenty-ninth aspect.

According to a forty-sixth aspect, an embodiment of this application provides a chip, including a processor. The processor is coupled to a memory, the memory is configured to store a program or instructions, and when the program or the instructions are executed by the processor, the chip is enabled to implement the method according to any one of the twenty-sixth aspect or the possible implementations of the twenty-sixth aspect.

According to a forty-seventh aspect, an embodiment of this application provides a chip, including a processor. The processor is coupled to a memory, the memory is configured to store a program or instructions, and when the program or the instructions are executed by the processor, the chip is enabled to implement the method according to any one of the twenty-seventh aspect or the possible implementations of the twenty-seventh aspect.

According to a forty-eighth aspect, an embodiment of this application provides a chip, including a processor. The processor is coupled to a memory, the memory is configured to store a program or instructions, and when the program or the instructions are executed by the processor, the chip is enabled to implement the method according to any one of the twenty-eighth aspect or the possible implementations of the twenty-eighth aspect.

According to a forty-ninth aspect, an embodiment of this application provides a chip, including a processor. The processor is coupled to a memory, the memory is configured to store a program or instructions, and when the program or the instructions are executed by the processor, the chip is enabled to implement the method according to any one of the twenty-ninth aspect or the possible implementations of the twenty-ninth aspect.

According to a fiftieth aspect, an embodiment of this application provides a communication system. The system includes the apparatus according to the thirtieth aspect, and/or the apparatus according to the thirty-first aspect, and/or the apparatus according to the thirty-second aspect, and/or the apparatus according to the thirty-third aspect; or the system includes the apparatus according to the thirty-fourth aspect, and/or the apparatus according to the thirty-fifth aspect, and/or the apparatus according to the thirty-sixth aspect, and/or the apparatus according to the thirty-seventh aspect.

It may be understood that any communication apparatus, chip, computer-readable medium, computer program product, communication system, or the like provided above is configured to perform a corresponding method provided above. Therefore, for beneficial effects that can be achieved by the communication apparatus, the chip, the computer-readable medium, the computer program product, the communication system, or the like, refer to the beneficial effects in the corresponding method. Details are not described herein again.

According to a fifty-first aspect, an embodiment of this application provides a communication method. The method is used in a case in which a master base station triggers conditional primary secondary cell PSCell addition/change, or the method is used in a case in which a source secondary base station triggers conditional PSCell change between secondary base stations. The method includes: The master base station sends a first message to a terminal, where the first message indicates an addition/change condition and a radio resource configuration of each candidate PSCell in a PSCell list. The master base station receives a second message from the terminal, where the second message indicates, to the master base station, that the terminal receives the first message. The master base station sends a third message to a first secondary base station based on the second message, where the third message indicates that the terminal receives the first message.

According to the method provided in the fifty-first aspect, after receiving, from the terminal, the second message indicating to the master base station that the terminal receives the first message, the master base station may send the third message to the first SN based on the second message, so that the first SN determines that the terminal receives the first message.

In a possible implementation, when the first message indicates the addition condition and the radio resource configuration of each candidate PSCell in the candidate PSCell list, the first secondary base station is at least one of candidate secondary base stations determined by the master base station for the terminal. When the first message indicates the change condition and the radio resource configuration of each candidate PSCell in the candidate PSCell list, the first secondary base station is at least one of candidate secondary base stations determined by the master base station or the source secondary base station for the terminal and the source secondary base station, and the source secondary base station is a secondary base station currently connected to the terminal.

According to a fifty-second aspect, an embodiment of this application provides a communication method. The method is used in a case in which a master base station triggers conditional primary secondary cell PSCell addition/change, or the method is used in a case in which a source secondary base station triggers conditional PSCell change between secondary base stations. The method includes: A terminal receives a first message from the master base station, where the first message indicates an addition/change condition and a radio resource configuration of each candidate PSCell in a PSCell list. The terminal sends a second message to the master base station, where the second message indicates, to the master base station, that the terminal receives the first message.

According to the method provided in the fifty-second aspect, after receiving the first message, the terminal may send, to the master base station, the second message indicating to the master base station that the terminal receives the first message, so that the master base station determines that the terminal receives the first message, and the master base station may indicate, to the first secondary base station, that the terminal receives the first message.

According to a fifty-third aspect, an embodiment of this application provides a communication method. The method is used in a case in which a master base station triggers conditional primary secondary cell PSCell addition/change, or the method is used in a case in which a source secondary base station triggers conditional PSCell change between secondary base stations. The method includes: A first secondary base station receives a third message from the master base station, where the third message indicates that a terminal receives the first message, the first message indicates an addition/change condition and a radio resource configuration of each candidate PSCell in a PSCell list, the third message is determined by the master base station based on a second message sent by the terminal, and the second message indicates, to the master base station, that the terminal receives the first message. The first secondary base station determines, based on the third message, that the terminal receives the first message.

According to the method provided in the fifty-third aspect, the first secondary base station may determine that the terminal receives the first message.

In a possible implementation, when the first message indicates the addition condition and the radio resource configuration of each candidate PSCell in the candidate PSCell list, the first secondary base station is at least one of candidate secondary base stations determined by the master base station for the terminal. When the first message indicates the change condition and the radio resource configuration of each candidate PSCell in the candidate PSCell list, the first secondary base station is at least one of candidate secondary base stations determined by the master base station or the source secondary base station for the terminal and the source secondary base station, and the source secondary base station is a secondary base station currently connected to the terminal.

According to a fifty-fourth aspect, an embodiment of this application provides a communication apparatus. The communication apparatus is used in a case in which a master base station triggers conditional primary secondary cell PSCell addition/change, or the communication apparatus is used in a case in which a source secondary base station triggers conditional PSCell change between secondary base stations. The communication apparatus includes a transceiver module. The transceiver module is configured to send a first message to a terminal. The first message indicates an addition/change condition and a radio resource configuration of each candidate PSCell in a PSCell list. The transceiver module is further configured to receive a second message from the terminal. The second message indicates, to the master base station, that the terminal receives the first message. The transceiver module is further configured to send a third message to a first secondary base station based on the second message. The third message indicates that the terminal receives the first message.

In a possible implementation, when the first message indicates the addition condition and the radio resource configuration of each candidate PSCell in the candidate PSCell list, the first secondary base station is at least one of candidate secondary base stations determined by the communication apparatus for the terminal. When the first message indicates the change condition and the radio resource configuration of each candidate PSCell in the candidate PSCell list, the first secondary base station is at least one of candidate secondary base stations determined by the communication apparatus or the source secondary base station for the terminal and the source secondary base station, and the source secondary base station is a secondary base station currently connected to the terminal.

According to a fifty-fifth aspect, an embodiment of this application provides a communication apparatus. The communication apparatus is used in a case in which a master base station triggers conditional primary secondary cell PSCell addition/change, or the communication apparatus is used in a case in which a source secondary base station triggers conditional PSCell change between secondary base stations. The communication apparatus includes a transceiver module. The transceiver module is configured to receive a first message from the master base station. The first message indicates an addition/change condition and a radio resource configuration of each candidate PSCell in a PSCell list. The transceiver module is further configured to send a second message to the master base station. The second message indicates, to the master base station, that the communication apparatus receives the first message.

According to a fifty-sixth aspect, an embodiment of this application provides a communication apparatus. The communication apparatus is used in a case in which a master base station triggers conditional primary secondary cell PSCell addition/change, or the communication apparatus is used in a case in which a source secondary base station triggers conditional PSCell change between secondary base stations. The communication apparatus includes a transceiver module and a processing module. The transceiver module is configured to receive a third message from the master base station. The third message indicates that a terminal receives the first message, the first message indicates an addition/change condition and a radio resource configuration of each candidate PSCell in a PSCell list, the third message is determined by the master base station based on a second message sent by the terminal, and the second message indicates, to the master base station, that the terminal receives the first message. The processing module is configured to determine, based on the third message, that the terminal receives the first message.

In a possible implementation, when the first message indicates the addition condition and the radio resource configuration of each candidate PSCell in the candidate PSCell list, the communication apparatus is at least one of candidate secondary base stations determined by the master base station for the terminal. When the first message indicates the change condition and the radio resource configuration of each candidate PSCell in the candidate PSCell list, the communication apparatus is at least one of candidate secondary base stations determined by the master base station or the source secondary base station for the terminal and the source secondary base station, and the source secondary base station is a secondary base station currently connected to the terminal.

According to a fifty-seventh aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the fifty-first aspect or the possible implementations of the fifty-first aspect.

According to a fifty-eighth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the fifty-second aspect or the possible implementations of the fifty-second aspect.

According to a fifty-ninth aspect, an embodiment of this application provides a communication apparatus, including a processor. The processor is coupled to a memory, the memory is configured to store a program or instructions, and when the program or the instructions are executed by the processor, the apparatus is enabled to implement the method according to any one of the fifty-third aspect or the possible implementations of the fifty-third aspect.

According to a sixtieth aspect, an embodiment of this application provides a computer-readable medium. The computer-readable medium stores a computer program or instructions, and when the computer program or the instructions are executed, a computer is enabled to perform the method according to any one of the fifty-first aspect or the possible implementations of the fifty-first aspect.

According to a sixty-first aspect, an embodiment of this application provides a computer-readable medium. The computer-readable medium stores a computer program or instructions, and when the computer program or the instructions are executed, a computer is enabled to perform the method according to any one of the fifty-second aspect or the possible implementations of the fifty-second aspect.

According to a sixty-second aspect, an embodiment of this application provides a computer-readable medium. The computer-readable medium stores a computer program or instructions, and when the computer program or the instructions are executed, a computer is enabled to perform the method according to any one of the fifty-third aspect or the possible implementations of the fifty-third aspect.

According to a sixty-third aspect, an embodiment of this application provides a computer program product, including computer program code, and when the computer program code is run on a computer, the computer is enabled to perform the method according to any one of the fifty-first aspect or the possible implementations of the fifty-first aspect.

According to a sixty-fourth aspect, an embodiment of this application provides a computer program product, including computer program code, and when the computer program code is run on a computer, the computer is enabled to perform the method according to any one of the fifty-second aspect or the possible implementations of the fifty-second aspect.

According to a sixty-fifth aspect, an embodiment of this application provides a computer program product, including computer program code, and when the computer program code is run on a computer, the computer is enabled to perform the method according to any one of the fifty-third aspect or the possible implementations of the fifty-third aspect.

According to a sixty-sixth aspect, an embodiment of this application provides a chip, including a processor. The processor is coupled to a memory, the memory is configured to store a program or instructions, and when the program or the instructions are executed by the processor, the chip is enabled to implement the method according to any one of the fifty-first aspect or the possible implementations of the fifty-first aspect.

According to a sixty-seventh aspect, an embodiment of this application provides a chip, including a processor. The processor is coupled to a memory, the memory is configured to store a program or instructions, and when the program or the instructions are executed by the processor, the chip is enabled to implement the method according to any one of the fifty-second aspect or the possible implementations of the fifty-second aspect.

According to a sixty-eighth aspect, an embodiment of this application provides a chip, including a processor. The processor is coupled to a memory, the memory is configured to store a program or instructions, and when the program or the instructions are executed by the processor, the chip is enabled to implement the method according to any one of the fifty-third aspect or the possible implementations of the fifty-third aspect.

According to a sixty-ninth aspect, an embodiment of this application provides a communication system. The system includes the apparatus according to the fifty-fourth aspect, and/or the apparatus according to the fifty-fifth aspect, and/or the apparatus according to the fifty-sixth aspect; or the system includes the apparatus according to the fifty-seventh aspect, and/or the apparatus according to the fifty-eighth aspect, and/or the apparatus according to the fifty-ninth aspect.

It may be understood that any communication apparatus, chip, computer-readable medium, computer program product, communication system, or the like provided above is configured to perform a corresponding method provided above. Therefore, for beneficial effects that can be achieved by the communication apparatus, the chip, the computer-readable medium, the computer program product, the communication system, or the like, refer to the beneficial effects in the corresponding method. Details are not described herein again.

### BRIEF DESCRIPTION OF DRAWINGS

FIG. 1 is a schematic diagram of an architecture of a communication system according to an embodiment of this application;
FIG. 2 is a schematic diagram of a hardware structure of a communication apparatus according to an embodiment of this application;
FIG. 3 to FIG. 5 each are a schematic flowchart of a communication method according to an embodiment of this application;
FIG. 6 to FIG. 12 each are a schematic diagram of a structure of a communication apparatus according to an embodiment of this application; and
FIG. 13 and FIG. 14 each are a schematic composition diagram of a communication system according to an embodiment of this application.

### DESCRIPTION OF EMBODIMENTS

The following describes implementations of embodiments of this application in detail with reference to the accompanying drawings.

The method provided in embodiments of this application may be used in various multi-radio (or multi-air interface) dual connectivity (multiple radio dual connectivity, MR-DC) architectures, for example, dual connectivity between a 4th generation (4th generation, 4G) communication system and a 5th generation (5th generation, 5G) communication system, dual connectivity between a 5G communication system and a 4G communication system, dual connectivity between a 5G communication system and a 5G communication system, dual connectivity between a future evolved communication system such as a 6G communication system and another system, or dual connectivity between two 6G systems.

The dual connectivity between the 4G communication system and the 5G communication system may include dual connectivity (E-UTRA-NR dual connectivity, EN-DC) between an evolved universal terrestrial radio access (evolved universal terrestrial radio access, E-UTRA) system and a new radio (new radio, NR) system, dual connectivity (NG-RAN E-UTRA-NR dual connectivity, NGEN-DC) between an E-UTRA system and an NR system in a 5G core network, and the like. The EN-DC may also be referred to as an option 3 series (option 3 series). The EN-DC is DC in which a long term evolution (long term evolution, LTE) base station such as an eNB serves as a master node (master node, MN) or a master base station, and an NR base station such as a gNB serves as a secondary node (secondary node, SN) or a secondary base station. In the EN-DC, the MN and the SN each may have a data plane connection to an evolved packet core (evolved packet core, EPC) network (that is, a 4G core network), to provide air interface resources for data transmission between a terminal and the EPC. The NGEN-DC may also be referred to as an option 7 series (option 7 series). The NGEN-DC is DC in which an LTE base station such as an ng-eNB serves as an MN, and an NR base station such as a gNB serves as an SN. Different from the EN-DC, in the NGEN-DC, both the MN and the SN are connected to a 5G core network (5G core network, 5GC), to provide air interface transmission resources for data between a terminal and the 5GC.

The dual connectivity between the 5G communication system and the 4G communication system may include dual connectivity (NR-E-UTRA dual connectivity, NE-DC) between an NR system and an E-UTRA system, and the like. The NE-DC may also be referred to as an option 4 series (option 4 series). In the NE-DC, an NR base station such as a gNB serves as an MN, and an LTE base station such as an ng-eNB serves as an SN. In addition, the MN and the SN each may have a data plane connection to a 5GC, to provide air interface transmission resources for data between a terminal and the 5GC.

The dual connectivity between the 5G communication systems may include DC between NR systems. In the DC between the NR systems, both an MN and an SN are NR base stations.

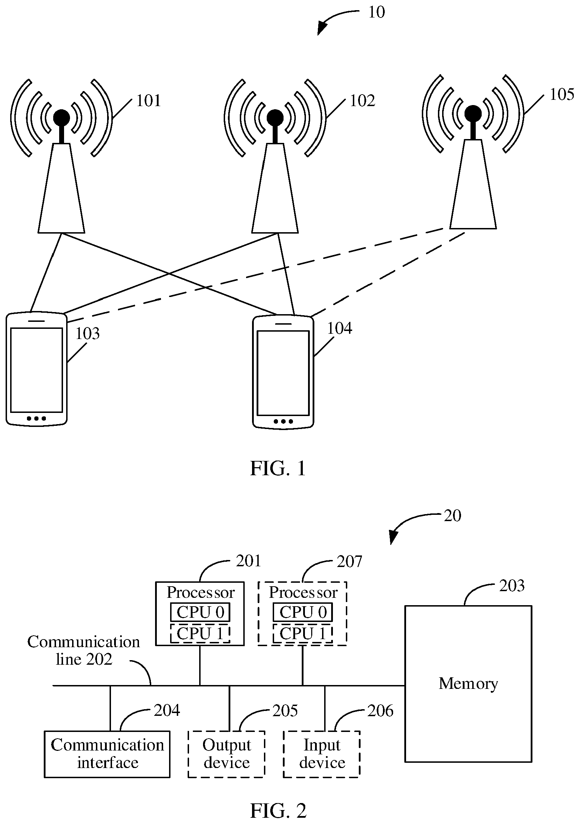

The following uses only a communication system 10 shown in FIG. 1 as an example to describe the method provided in embodiments of this application.

FIG. 1 is a schematic diagram of an architecture of the communication system 10 according to an embodiment of this application. In FIG. 1, the communication system 10 may include a network device 101, a network device 102, a network device 105, a terminal 103, and a terminal 104. FIG. 1 is merely a schematic diagram, and does not constitute a limitation on an application scenario of the technical solutions provided in this application.

The network device, for example, the network device 101, the network device 102, or the network device 105 in FIG. 1 may be any device having a wireless transceiver function. The network device includes but is not limited to: an evolved NodeB (NodeB, eNB, or e-NodeB, evolved NodeB) in LTE, a base station (gNodeB or gNB) or a transmission reception point (transmission receiving point/transmission reception point, TRP) in NR, a subsequently evolved base station in 3GPP, and the like. Abase station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. The network device may alternatively be a radio controller, a centralized unit (centralized unit, CU), and/or a distributed unit (distributed unit, DU) in a cloud radio access network (cloud radio access network, CRAN) scenario.

The terminal in FIG. 1, for example, the terminal 103 or the terminal 104, is a device having a wireless transceiver function, and may be deployed on land, including an indoor or outdoor device, a handheld device, a wearable device, or a vehicle-mounted device; or may be deployed on the water (for example, on a ship); or may be deployed in the air (for example, on an airplane, a balloon, or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application. Sometimes, the terminal may also be referred to as a terminal device, user equipment (user equipment, UE), an access terminal, a vehicle-mounted terminal, an industrial control terminal, a UE unit, a UE station, a mobile station, a remote station, a remote terminal, a mobile device, a UE terminal device, a wireless communication device, a machine terminal, a UE agent, a UE apparatus, or the like. The terminal may be fixed or movable.

By way of example and not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In FIG. 1, the terminal 103 or the terminal 104 may be dual-connected to the network device 101 and the network device 102. One network device is an MN, and the other network device is an SN. One or more serving cells in the MN form a master cell group (master cell group, MCG). The MCG includes a primary cell (primary cell, PCell). In addition to the PCell, the MCG optionally includes one or more secondary cells (secondary cell, SCell). One or more serving cells in the SN form a secondary cell group (secondary cell group, SCG). The SCG includes a PSCell. In addition to the PSCell, the SCG may optionally include one or more SCells.

In the communication system 10 shown in FIG. 1, the terminal 103 or the terminal 104 may perform CPAC. For example, the terminal 103 may perform CPA by using the following example 1, and perform CPC by using the following example 2.

Example 1: An example in which the terminal 103 establishes an RRC connection to the network device 101, and the network device needs to configure CPA for the terminal 103, so that the terminal 103 establishes a connection to the network device 102 is used for description. After establishing an RRC connection to the terminal 103, the network device 101 may configure one or more candidate PSCells for the terminal 103, and send an SN addition request message to a network device to which the one or more candidate PSCells belong. The SN addition request message includes identifiers of the one or more candidate PSCells. After receiving the SN addition request information, the network device to which the one or more candidate PSCells belong filters the candidate PSCells and sends a message 1 to the network device 101. The message 1 includes identifiers of candidate PSCells obtained after the filtering and radio resource configuration information corresponding to the candidate PSCells obtained after the filtering, and the radio resource configuration information corresponding to the candidate PSCells obtained after the filtering indicates radio resource configurations corresponding to the filtered candidate PSCells obtained after the filtering. After receiving the message 1, the network device 101 sends a message 2 to the terminal 103. The message 2 includes the identifiers of the candidate PSCells obtained after the filtering, measurement identifiers corresponding to the candidate PSCells obtained after the filtering, and the radio resource configuration information corresponding to the candidate PSCells obtained after the filtering. After receiving the message 2, the terminal 103 determines, based on the measurement identifiers corresponding to the candidate PSCells obtained after the filtering, addition conditions of the candidate PSCells obtained after the filtering, detects the addition conditions of the PSCells obtained after the filtering, and when detecting at least one candidate PSCell that meets an addition condition, selects one candidate PSCell that meets an addition condition (for example, a candidate PSCell configured by the network device 102 for the terminal), and uses a radio resource configuration of the candidate PSCell. Subsequently, the terminal 103 initiates random access to the candidate PSCell, and establishes dual connections to the network device 101 and the network device 102 after the random access to the candidate PSCell succeeds.

Example 2: An example in which the terminal 103 is dual-connected to the network device 101 and the network device 102, the network device 101 is an MN, the network device 102 is a current serving SN corresponding to the terminal, and the network device 101 triggers CPC is used for description. The network device 101 determines a message 3. The message 3 includes an identifier of each candidate PSCell in a candidate PSCell list 1 and a measurement identifier corresponding to each candidate PSCell. The network device 101 sends, to a candidate SN, a message for requesting to add the candidate SN. The candidate SN receives the message for requesting to add the candidate SN, and sends a message 4 to the network device 101. The message 4 includes an identifier of each candidate PSCell in a candidate PSCell list 2 and radio resource configuration information corresponding to each candidate PSCell. The message for requesting to add a candidate SN does not include an identifier of a candidate PSCell determined by the network device 101. Therefore, the candidate PSCell list 2 and the candidate PSCell list 1 may be the same or different. The radio resource configuration information corresponding to the candidate PSCell indicates a radio resource configuration of the candidate PSCell. After receiving the message 4, the network device 101 determines, based on the message 3 and the message 4, a candidate PSCell configured for the terminal 103, and a measurement identifier and radio resource configuration information that correspond to the candidate PSCell configured for the terminal 103, and sends a message 5 to the terminal 103. The message 5 includes an identifier of the candidate PSCell configured for the terminal 103, and the measurement identifier and radio resource configuration information that correspond to the candidate PSCell configured for the terminal 103. After receiving the message 5, the terminal 103 determines, based on the measurement identifier corresponding to the candidate PSCell configured for the terminal 103, a change condition corresponding to the candidate PSCell configured for the terminal 103, detects the change condition of the candidate PSCell configured for the terminal 103, and when detecting at least one candidate PSCell that meets a change condition, selects one candidate PSCell that meets a change condition (for example, the candidate PSCell configured by the network device 105 for the terminal), and uses a radio resource configuration of the candidate PSCell. Subsequently, the terminal 103 initiates random access to the candidate PSCell, and establishes dual connections to the network device 101 and the network device 105 after the random access to the candidate PSCell succeeds.

An addition condition of a candidate PSCell is used by a terminal to determine whether to add the candidate PSCell. For example, when the terminal detects that the candidate PSCell meets the addition condition of the candidate PSCell, the terminal determines to use the radio resource configuration of the candidate PSCell, and adds the candidate PSCell. When the terminal detects that the candidate PSCell does not meet the addition condition of the candidate PSCell, the terminal determines not to use the radio resource configuration of the candidate PSCell, and does not add the candidate PSCell.

A change condition of a candidate PSCell is used by the terminal to determine whether to change a PSCell currently connected to the terminal to the candidate PSCell. For example, when detecting that the candidate PSCell meets the change condition of the candidate PSCell, the terminal determines to use the radio resource configuration of the candidate PSCell, and changes the PSCell currently connected to the terminal to the candidate PSCell. When detecting that the candidate PSCell does not meet the change condition of the candidate PSCell, the terminal determines not to use the radio resource configuration of the candidate PSCell, and does not change the PSCell currently connected to the terminal to the candidate PSCell.

In a possible implementation, the addition condition or change condition of the candidate PSCell (referred to as "addition/change condition of the candidate PSCell" for short) includes an execution event type of the addition/change condition of the candidate PSCell. The execution event type may also be referred to as a measurement event, a reporting event, or the like. The terminal may measure signal quality of the candidate PSCell, or measure signal quality of the candidate PSCell and signal quality of a neighboring cell of the candidate PSCell, or measure signal quality of the candidate PSCell and signal quality of a PSCell currently connected to the terminal, and determine, based on a measurement result and the execution event type, whether to add the candidate PSCell, or determine whether to change the PSCell currently connected to the terminal to the candidate PSCell.

Further, the execution event type includes one or more events or a plurality of same events with different configurations. For example, the execution event type may include one or more of the following events: an event A3, an event A4, an event A5, an event B 1, or an event B2. The event A3 indicates that signal quality of a neighboring cell is greater than signal quality of a special cell (special cell, SpCell) by an offset (offset) or is equal to signal quality of a special cell. Both PCell and PSCell are referred to as SpCell. The event A4 indicates that signal quality of a neighboring cell is greater than or equal to a specified threshold. The event A5 indicates that signal quality of a SpCell is lower than or equal to a threshold 1 (threshold 1) and signal quality of a neighboring cell is higher than or equal to a threshold 2 (threshold 2). The event B 1 indicates that signal quality of a neighboring cell of inter radio access technology (inter radio access technology, inter RAT) is higher than or equal to a specified threshold. The event B2 indicates that signal quality of a PCell is lower than or equal to a threshold 3 (threshold 3) and signal quality of an inter RAT neighboring cell is higher than or equal to a threshold 4 (threshold 4). The foregoing events are merely examples of the event in the execution event type. The execution event type may further include another event. This is not limited. The execution event type further includes a threshold corresponding to the event in the execution event type. The execution event type further includes a time length (timeTo Trigger) meeting the event in the execution event type, a hysteresis (hysteresis) value for entering/exiting the event in the execution event type, and/or the like. The event in the execution event type may correspond to one or more thresholds. For example, the event A5 corresponds to two thresholds. A same event in the execution event type may correspond to different measurement metrics. For example, the event A3 may correspond to A3 reference signal received power (reference signal received power, RSRP) and A3 reference signal received quality (reference signal received quality, RSRQ). A same event with a plurality of configurations may mean that a same event corresponds to different measurement amounts, or a same measurement amount in a same event has different configurations. When the execution event type includes a plurality of events or a same event with a plurality of configurations, the terminal considers that a detected candidate PSCell meets an addition condition or a change condition of the candidate PSCell only when all the plurality of events or the same event with the plurality of configurations is met.

In Example 1, the radio resource configuration information of the candidate PSCell is used by the terminal to communicate with the candidate PSCell after the terminal adds the candidate PSCell. In Example 2, the radio resource configuration information of the candidate PSCell is used by the terminal to communicate with the candidate PSCell after changing the PSCell currently connected to the terminal to the candidate PSCell.

In a possible implementation, the radio resource configuration information of the candidate PSCell includes at least one of the following information: a random access resource allocated by the candidate PSCell to the terminal, a cell radio network temporary identifier (cell radio network temporary identifier, C-RNIT), a cell global identifier (cell global identification, CGI) of the candidate PSCell, a physical cell identifier (physical cell identifier, PCI) of the candidate PSCell, and frequency information corresponding to the candidate PSCell.

The frequency information corresponding to the candidate PSCell may include one or more of the following: an absolute frequency (such as absoluteFrequencySSB) of a synchronization signal block, an absolute frequency location (such as absoluteFrequencyPointA) of a reference resource module (common RB0), a frequency bandwidth list (such as frequencyBandList), a subcarrier spacing (sub-carrier spacing, SCS)-specific carrier list (such as scs-SpecificCarrierList), and the like.

Further, the radio resource configuration information of the candidate PSCell further includes resource information corresponding to the candidate PSCell. The resource information corresponding to the candidate PSCell includes one or more of the following: a bearer configuration parameter (radioBearerConfig), a cell group configuration (cellGroupConfig) parameter, a physical (physical, PHY) layer configuration parameter, a media access control (media access control, MAC) layer configuration parameter, a radio link control (radio link control, RLC) layer configuration parameter, a packet data convergence protocol (packet data convergence protocol, PDCP) layer configuration parameter, a service data adaptation protocol (service data adaptation protocol, SDAP) layer configuration parameter, or an RRC layer configuration parameter. The radio resource configuration information of the candidate PSCell may also be referred to as a radio resource configuration of the candidate PSCell, and the like. This is not limited. Further, the radio resource configuration information of the candidate PSCell further includes configuration information (for example, a physical layer configuration parameter corresponding to an SCell) of another SCell in an SCG corresponding to the candidate PSCell. Further, the radio resource configuration information of the candidate PSCell may be an RRC reconfiguration message, and the RRC reconfiguration message includes the foregoing information.

In a possible implementation, a measurement identifier corresponding to a candidate PSCell corresponds to an addition/change condition of the candidate PSCell. For example, in Example 1, a measurement identifier corresponding to a candidate PSCell corresponds to an addition condition of the candidate PSCell. In Example 2, a measurement identifier corresponding to a candidate PSCell corresponds to a change condition of the candidate PSCell.

Further, the measurement identifier may be associated with a measurement object identifier (measObjectID) and a measurement reporting configuration identifier (ReportConfigId). The measurement object identifier is used to identify a measurement object configuration, and the measurement object configuration includes a to-be-measured frequency, or the measurement object configuration includes a frequency of a candidate PSCell corresponding to the measurement identifier. The measurement object configuration may further include other information such as how to obtain a signal quality measurement result of a cell based on a measurement result of signal quality of a reference signal of each beam in the cell. The measurement reporting configuration identifier is used to identify a measurement reporting configuration, and the measurement reporting configuration includes an addition/change condition of a candidate PSCell corresponding to the measurement identifier.

In a possible implementation, a measurement identifier corresponding to a candidate PSCell and radio resource configuration information corresponding to the candidate PSCell may be associated with a conditional reconfiguration identifier (ConReconfigID) corresponding to the candidate PSCell, or a conditional reconfiguration identifier may be used to identify a CPA configuration or a CPC configuration, and the CPA configuration or the CPC configuration includes a measurement identifier corresponding to a candidate PSCell and radio resource configuration information corresponding to the candidate PSCell. A CPA configuration or CPC configuration may also be referred to as a conditional PSCell addition/change (conditional PSCell addition/change, CPAC) configuration of a candidate PSCell, a CPC configuration of a candidate PSCell, a CPA configuration of a candidate PSCell, CPAC configuration information of a candidate PSCell, CPC configuration information of a candidate PSCell, or CPA configuration information of a candidate PSCell. It may be understood that measurement identifiers corresponding to different candidate PSCells may be the same or may be different. Different candidate PSCells correspond to different conditional reconfiguration identifiers. Therefore, when a network side is to modify information such as an addition/change condition of a candidate PSCell and/or radio resource configuration information of the candidate PSCell, and/or cancel a configuration of the candidate PSCell (that is, the terminal does not need to determine the addition/change condition of the candidate PSCell), a message sent to the terminal may carry a conditional reconfiguration identifier of the candidate PSCell, so that the terminal determines the candidate PSCell for which modification is to be performed.

For example, measurement identifiers and conditional reconfiguration identifiers corresponding to a candidate PSCell 1, a candidate PSCell 2, and a candidate PSCell 3 may be shown as follows: The measurement identifier corresponding to the candidate PSCell 1 is measID 1, and the conditional reconfiguration identifier corresponding to the candidate PSCell 1 is ConReconfigID 1. The measurement identifier corresponding to the candidate PSCell 2 is measID 1, and the conditional reconfiguration identifier corresponding to the candidate PSCell 1 is ConReconfigID 2. The measurement identifier corresponding to the candidate PSCell 3 is measID 3, and the conditional reconfiguration identifier corresponding to the candidate PSCell 1 is ConReconfigID 3.

Optionally, the message 2 in Example 1 further includes a conditional reconfiguration identifier. The message 5 in Example 2 further includes a conditional reconfiguration identifier.

It can be learned from Example 2 that, in a process in which the terminal performs CPC, the network device 101 determines the message 3, and sends, to the candidate SN, a message for requesting to add the candidate SN. The network device 101 further receives the message 4 from the candidate SN. Subsequently, the network device 101 determines, based on the message 3, the measurement identifier corresponding to the candidate PSCell configured for the terminal 103, determines, based on the message 4, the radio resource configuration information corresponding to the candidate PSCell configured for the terminal 103, and sends the message 5 to the terminal 103. That is, the network device 101 needs to associate, by using the identifier of the candidate PSCell, the measurement identifier corresponding to the candidate PSCell with the radio resource configuration information corresponding to the candidate PSCell, to obtain information that needs to be configured in the message 5, and then send the message 5 to the terminal. A processing process of the network device 101 is complex. In addition, the network device 101 receives the message 4 only after determining the message 3. Therefore, before receiving the message 4, the network device 101 needs to store information in the message 3. This requires additional memory of the network device 101 for storage.

In addition, because a candidate PSCell in the candidate PSCell list 1 is determined by the MN, and a candidate PSCell in the candidate PSCell list 2 is determined by the candidate SN, when the candidate PSCell list 1 includes a candidate PSCell that does not exist in the candidate PSCell list 2, the network device 101 may fail to determine radio resource configuration information corresponding to the candidate PSCell configured for the terminal 103. For example, the candidate PSCell list 1 includes the candidate PSCell 1 and the candidate PSCell 2, and the candidate PSCell list 2 includes the candidate PSCell 2 and the candidate PSCell 3. If the candidate PSCell that is configured for the terminal 103 and that is determined by the network device 101 is the candidate PSCell 1, but the candidate PSCell list 2 does not include the candidate PSCell 1, the network device 101 cannot determine radio resource configuration information corresponding to the candidate PSCelll based on the message 4.

To simplify a processing process of the network device 101 and resolve a problem that the network device 101 may not be able to determine radio resource configuration information corresponding to a candidate PSCell, embodiments of this application provide a communication method: An MN sends a first message to a candidate SN. The first message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier. After receiving the first message, the candidate SN sends a second message to the MN. The second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list. After receiving the second message, the MN sends a third message to the terminal. The third message includes the identifier of each candidate PSCell in the second candidate PSCell list, the first identifier corresponding to each candidate PSCell, and the radio resource configuration information corresponding to each candidate PSCell.

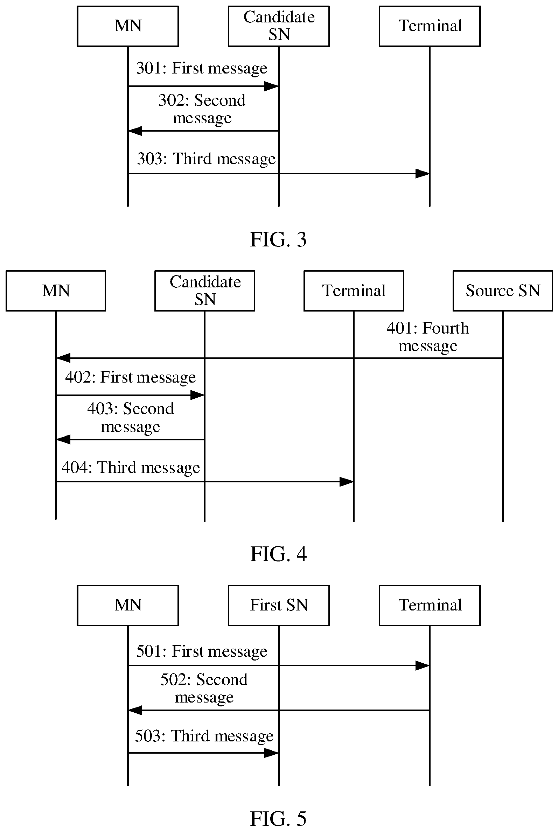

In the foregoing process, the MN sends the first message to the candidate SN. After receiving the first message, the candidate SN may determine the second candidate PSCell list based on the first candidate PSCell list, and send the second message to the MN. In this way, after receiving the second message, the MN does not need to determine a measurement identifier and radio resource configuration information that correspond to a candidate PSCell and that are configured for the terminal, but sends, to the terminal, some or all content of the second message determined by the candidate SN. This can simplify a processing process of the MN and reduce overheads of the MN. In addition, in the foregoing process, the MN sends some or all of content of the second message determined by the candidate SN to the terminal, and a problem that the MN cannot determine the radio resource configuration information corresponding to the candidate PSCell does not occur. For a specific description of the communication method, refer to the following method shown in FIG. 3.

Example 2 is a case in which the MN triggers the CPC. In a specific application, the source SN may also trigger the CPC. For details, refer to Example 3 below.

Example 3: An example in which the terminal 103 is dual-connected to the network device 101 and the network device 102, the network device 101 is an MN, the network device 102 is a current serving SN corresponding to the terminal, and the network device 102 triggers CPC is used for description. The network device 102 sends a message 6 to the network device 101. The message 6 includes an identifier of each candidate PSCell in a candidate PSCell list 3 and a measurement identifier corresponding to each candidate PSCell. After receiving the message 6, the network device 101 sends, to a candidate SN, a message for requesting to add the candidate SN. The candidate SN receives the message for requesting to add the candidate SN, and then sends a message 7 to the network device 101. The message 7 includes an identifier of each candidate PSCell in a candidate PSCell list 4 and radio resource configuration information corresponding to each candidate PSCell. The candidate PSCell list 4 and the candidate PSCell list 3 may be the same or different. The radio resource configuration information corresponding to the candidate PSCell indicates a radio resource configuration of the candidate PSCell. After receiving the message 7, the network device 101 determines, based on the message 6 and the message 7, a candidate PSCell configured for the terminal 103, and a measurement identifier and radio resource configuration information that correspond to the candidate PSCell configured for the terminal 103, and sends a message 8 to the terminal 103. The message 8 includes an identifier of the candidate PSCell configured for the terminal 103, and the measurement identifier and radio resource configuration information that correspond to the candidate PSCell configured for the terminal 103. After receiving the message 8, the terminal 103 determines, based on the measurement identifier corresponding to the candidate PSCell configured for the terminal 103, a change condition corresponding to the candidate PSCell configured for the terminal 103, detects the change condition of the candidate PSCell configured for the terminal 103, and when detecting at least one candidate PSCell that meets a change condition, selects one candidate PSCell that meets a change condition (for example, the candidate PSCell configured by the network device 105 for the terminal), and uses a radio resource configuration of the candidate PSCell. Subsequently, the terminal 103 initiates random access to the candidate PSCell, and establishes dual connections to the network device 101 and the network device 105 after the random access to the candidate PSCell succeeds.

It can be learned from Example 3 that, in a process in which the terminal performs CPC, the network device 101 receives the message 6 from the network device 102, and the network device 101 further receives the message 7 from the candidate SN. Subsequently, the network device 101 determines, based on the message 6, the measurement identifier corresponding to the candidate PSCell configured for the terminal 103, determines, based on the message 7, the radio resource configuration information corresponding to the candidate PSCell configured for the terminal 103, and sends the message 8 to the terminal 103. That is, the network device 101 needs to associate, by using the identifier of the candidate PSCell, the measurement identifier corresponding to the candidate PSCell with the radio resource configuration information corresponding to the candidate PSCell, to obtain information that needs to be configured in the message 8, and then send the message 8 to the terminal. A processing process of the network device 101 is complex. In addition, the network device 101 receives the message 7 only after receiving the message 6. Therefore, before receiving the message 7, the network device 101 needs to store information in the message 6. This requires additional memory of the network device 101 for storage.

In addition, because a candidate PSCell in the candidate PSCell list 3 is determined by the source SN, and a candidate PSCell in the candidate PSCell list 4 is determined by the candidate SN, when the candidate PSCell list 4 includes a candidate PSCell that does not exist in the candidate PSCell list 3, the network device 101 may fail to determine a measurement identifier corresponding to the candidate PSCell configured for the terminal 103. For example, the candidate PSCell list 3 includes a candidate PSCell 1 and a candidate PSCell 2, and the candidate PSCell list 4 includes a candidate PSCell 2 and a candidate PSCell 3. Therefore, the network device 101 cannot determine a measurement identifier corresponding to the candidate PSCell 3 based on the message 7. Similarly, when the candidate PSCell list 3 includes a candidate PSCell that does not exist in the candidate PSCell list 4, the network device 101 may not be able to determine radio resource configuration information corresponding to the candidate PSCell configured for the terminal 103.

To simplify a processing process of the network device 101 and resolve a problem that the network device 101 may not be able to determine a measurement identifier corresponding to a candidate PSCell configured for the terminal 103 or radio resource configuration information corresponding to the candidate PSCell, embodiments of this application provide a communication method: A source SN sends a fourth message to an MN. The fourth message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier. After receiving the fourth message, the MN sends a first message to a candidate SN. The first message includes the identifier of each candidate PSCell in the first candidate PSCell list. Optionally, the first message further includes the first identifier corresponding to each candidate PSCell in the first candidate PSCell list. After receiving the first message, the candidate SN sends a second message to the MN. The second message includes an identifier of each candidate PSCell in a second candidate PSCell list and radio resource configuration information corresponding to each candidate PSCell. Optionally, the second message further includes a first identifier corresponding to each candidate PSCell in the second candidate PSCell list. The first candidate PSCell list includes the second candidate PSCell list. After receiving the second message, the MN sends a third message to the terminal. The third message includes the identifier of each candidate PSCell in the second candidate PSCell list, the first identifier corresponding to each candidate PSCell, and the radio resource configuration information corresponding to each candidate PSCell.

In the foregoing process, the source SN sends the fourth message to the MN. After receiving the fourth message, the MN sends the first message to the candidate SN. After receiving the first message, the candidate SN may determine the second candidate PSCell list based on the first candidate PSCell list, and send the second message to the MN. Because the MN sends, to the candidate SN, the identifier of each candidate PSCell in the first candidate PSCell list sent by the source SN, the candidate SN determines the identifier of each candidate PSCell in the second candidate list based on the identifier of each candidate PSCell in the first candidate list, and configures the radio resource configuration information corresponding to each candidate PSCell. In this way, the MN may find, from the first message sent by the source SN, a measurement identifier corresponding to each candidate PSCell in the second candidate list, and a problem that the MN cannot determine the measurement identifier corresponding to the candidate PSCell or the radio resource configuration information corresponding to the candidate PSCell does not occur. Further, when the first message and the second message include the first identifier, after receiving the second message, the MN does not need to determine a measurement identifier and radio resource configuration information that correspond to a candidate PSCell and that are configured for the terminal, but sends, to the terminal, some or all content of the second message determined by the candidate SN. This can simplify a processing process of the MN and reduce overheads of the MN. For a specific description of the communication method, refer to the following method shown in FIG. 4.

The communication system 10 shown in FIG. 1 is merely used as an example, but is not intended to limit the technical solutions in this application. A person skilled in the art should understand that, in a specific implementation process, the communication system 10 may further include another device, and a quantity of network devices and a quantity of terminals may also be determined based on a specific requirement. This is not limited.

Optionally, each network element in FIG. 1 in embodiments of this application, for example, the network device 101, the network device 102, the terminal 103, the terminal 104, or the network device 105, may be a functional module in an apparatus. It may be understood that the functional module may be an element in a hardware device, for example, a communication chip or a communication component in a terminal or a network device, or may be a software functional module running on hardware or a virtualized function instantiated on a platform (for example, a cloud platform).

For example, each network element in FIG. 1 may be implemented by using a communication apparatus 20 in FIG. 2. FIG. 2 is a schematic diagram of a hardware structure of a communication apparatus that may be used in an embodiment of this application. The communication apparatus 20 includes at least one processor 201 and at least one communication interface 204, configured to implement the method provided in embodiments of this application. The communication apparatus 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path, for example, a bus, for transmitting information between the foregoing components.

The communication interface 204 is configured to communicate with another device or a communication network. The communication interface 204 may be any apparatus such as a transceiver, for example, may be an Ethernet interface, a radio access network (radio access network, RAN) interface, a wireless local area network (wireless local area networks, WLAN) interface, a transceiver, a pin, a bus, or a transceiver circuit.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer. This is not limited thereto. The memory may exist independently, and is coupled to the processor 201 through the communication line 202. The memory 203 may alternatively be integrated with the processor 201. The memory provided in embodiments of this application may be usually non-volatile. The memory 203 is configured to store computer-executable instructions for executing the solutions provided in embodiments of this application, and the processor 201 controls the execution. The processor 201 is configured to execute the computer-executable instructions stored in the memory 203, to implement a method provided in embodiments of this application.

The computer-executable instructions in embodiments of this application may alternatively be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the communication apparatus 20 may include a plurality of processors such as the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensor device.

The foregoing communication apparatus 20 may be a general-purpose device or a special-purpose device. In specific implementation, the communication apparatus 20 may be a desktop computer, a portable computer, a network server, a personal digital assistant (personal digital assistant, PDA), a mobile phone, a tablet computer, a wireless terminal device, an embedded device, a wearable device, or a device having a structure similar to that in FIG. 2. A type of the communication apparatus 20 is not limited in this embodiment of this application.

The following specifically describes the communication method in embodiments of this application with reference to FIG. 1 and FIG. 2.

It should be noted that names of messages between network elements, names of parameters in the messages, or the like in the following embodiments of this application are merely examples, and there may be other names in a specific implementation. This is not specifically limited in embodiments of this application.

It should be noted that, in the embodiments of this application, "/" may represent an "or" relationship between associated objects. For example, A/B may represent A or B; "and/or" may represent that three relationships exist between associated objects. For example, A and/or B may represent the following three cases: Only A exists, both A and B exist, and only B exists. A and B may be singular or plural.

To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

It should be noted that in embodiments of this application, "first", "second", "third", "A", "B", "C", and "D" are used to distinguish technical features in one type of technical feature, and there is no chronological order or no size order between the technical features described by "first", "second", "third", "A", "B", "C", and "D".

It may be understood that a same step or steps or technical features having a same function in embodiments of this application may be mutually referenced in different embodiments.

It may be understood that in embodiments of this application, the network device and/or the terminal may perform some or all steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application need to be performed.

In embodiments of this application, a specific structure of an execution body of the communication method is not particularly limited in embodiments of this application, provided that the method provided in embodiments of this application can be implemented. For example, the communication method provided in embodiments of this application may be performed by an MN, or a component used in the MN, for example, a chip. This is not limited in this application. Alternatively, the communication method provided in embodiments of this application may be performed by a candidate SN, or a component used in the candidate SN, for example, a chip. This is not limited in this application. Alternatively, the communication method provided in embodiments of this application may be performed by a source SN, or a component used in the source SN, for example, a chip. This is not limited in this application. Alternatively, the communication method provided in embodiments of this application may be performed by a terminal, or a component used in the terminal, for example, a chip. This is not limited in this application. The following embodiments are described by using examples in which the communication method is performed by an MN, a candidate SN, a source SN, and a terminal respectively.

FIG. 3 shows a communication method according to an embodiment of this application. The communication method is described by using an example in which an MN triggers CPC. The CPC may be inter-SN CPC (inter-SN CPC) or intra-SN CPC (intra-SN CPC). The inter-SN CPC means that a source SN is different from a candidate SN, and the source SN is an SN currently connected to a terminal. The intra-SN CPC means that the source SN and the candidate SN are the same SN. The communication method includes step 301 to step 303.

Step 301: The MN sends a first message to the candidate SN.

The MN may be referred to as a master node, a master base station, or the like. The MN may be the network device 101 or the network device 102 in FIG. 1. The candidate SN may be referred to as a candidate secondary node, a candidate secondary base station, or the like. The candidate SN may be the network device 105 in FIG. 1. The candidate SN is configured by the MN for the terminal. The terminal may be the terminal 103 or the terminal 104 in FIG. 1.

It may be understood that a quantity of candidate SNs is not limited in this application. When there are a plurality of candidate SNs, the MN sends the first message to each candidate SN.

The first message may have the following two cases:

Case 1: The first message may include an identifier of each candidate PSCell in a first candidate PSCell list, and a first identifier corresponding to each candidate PSCell.

The first candidate PSCell list includes at least one candidate PSCell configured (or recommended) by the MN for the terminal. The at least one candidate PSCell is a cell of one candidate SN. The at least one candidate PSCell is a PSCell with good signal quality detected by the MN, or a PSCell selected by the MN according to a preset algorithm. In this embodiment of this application, any candidate PSCell list may also be referred to as a candidate PSCell set, and is used to represent one or more candidate PSCells. For example, the first candidate PSCell list includes a candidate PSCell 1, a candidate PSCell 2, and a candidate PSCell 3.

The first identifier is determined (or generated) by the MN. The first identifier indicates a change condition of a candidate PSCell corresponding to the first identifier. That is, the first identifier indicates a condition for changing a PSCell currently connected to the terminal to the candidate PSCell corresponding to the first identifier.

Further, the first identifier includes a measurement identifier and/or a conditional reconfiguration identifier. For descriptions of the measurement identifier and the conditional reconfiguration identifier, refer to corresponding descriptions in FIG. 1. Details are not described again.

For example, the first candidate PSCell list includes the candidate PSCell 1, the candidate PSCell 2, and the candidate PSCell 3, and content included in the first message may be shown in Table 1. The first message shown in Table 1 includes the candidate PSCell 1, a measurement identifier 1 corresponding to the candidate PSCell 1, a conditional reconfiguration identifier 1 corresponding to the candidate PSCell 1, the candidate PSCell 2, a measurement identifier 2 corresponding to the candidate PSCell 2, a conditional reconfiguration identifier 2 corresponding to the candidate PSCell 2, the candidate PSCell 3, a measurement identifier 3 corresponding to the candidate PSCell 3, and a conditional reconfiguration identifier 3 corresponding to the candidate PSCell 3.

**Table 1**

| Identifier of a candidate PSCell | Measurement identifier corresponding to a candidate PSCell | Conditional reconfiguration identifier corresponding to a candidate PSCell |
|---|---|---|
| Candidate PSCell 1 | Measurement identifier 1 | Conditional reconfiguration identifier 1 |
| Candidate PSCell 2 | Measurement identifier 2 | Conditional reconfiguration identifier 2 |
| Candidate PSCell 3 | Measurement identifier 3 | Conditional reconfiguration identifier 3 |

Case 2: The first message includes an identifier of each candidate PSCell in a first candidate PSCell list, and a measurement identifier corresponding to each candidate PSCell. Further, optionally, the first message further includes a conditional reconfiguration identifier corresponding to each candidate PSCell in the first candidate PSCell list. The measurement identifier and the conditional reconfiguration identifier are determined (or generated) by the MN.

For example, the first candidate PSCell list includes the candidate PSCell 1, the candidate PSCell 2, and the candidate PSCell 3, and content included in the first message may be shown in Table 2. The first message shown in Table 2 includes the candidate PSCell 1, a measurement identifier 1 corresponding to the candidate PSCell 1, the candidate PSCell 2, a measurement identifier 2 corresponding to the candidate PSCell 2, the candidate PSCell 3, and a measurement identifier 3 corresponding to the candidate PSCell 3.

**Table 2**

| Identifier of a candidate PSCell | Measurement identifier corresponding to a candidate PSCell |
|---|---|
| Candidate PSCell 1 | Measurement identifier 1 |
| Candidate PSCell 2 | Measurement identifier 2 |
| Candidate PSCell 3 | Measurement identifier 3 |

It may be understood that Table 1 and Table 2 are merely examples of the first message. In actual application, the first message may alternatively be in another form. For example, the first message may alternatively be represented in a form of a set. The first message may alternatively include more or fewer rows than Table 1 or Table 2, and more or fewer columns than Table 1 or Table 2. This is not limited. For example, the first message includes fewer rows than Table 2. The first message may include a first row in Table 2, that is, the first message includes the candidate PSCell 1 and the measurement identifier 1 corresponding to the candidate PSCell 1.

In a possible implementation, in addition to determining the measurement identifier and/or the conditional reconfiguration identifier, the MN further needs to determine a measurement object identifier and a measurement reporting configuration identifier that are associated with the measurement identifier. In other words, the MN may further determine a measurement object configuration and a measurement reporting configuration corresponding to a candidate PSCell. For descriptions of the measurement object configuration and the measurement reporting configuration, refer to corresponding descriptions in FIG. 1. Details are not described again.

Further, the MN may send a seventh message to the terminal before step 303. The seventh message indicates a measurement identifier, and a measurement object identifier and a measurement reporting configuration identifier that are associated with the measurement identifier, so that after receiving the seventh message, the terminal determines a measurement object configuration and a measurement reporting configuration corresponding to the measurement identifier based on the seventh message.

In a possible implementation, the first message further includes second indication information, so that the candidate SN determines that the MN triggers conditional PSCell change. The second indication information indicates that the MN triggers the conditional PSCell change.

In a possible implementation, the MN sends the second indication information to the source SN, so that the source SN determines that the MN triggers conditional PSCell change. After receiving the second indication information, the source SN may send acknowledgment information to the MN. The acknowledgment information indicates that conditional PSCell change triggered by the MN is accepted.

In a possible implementation, the first message is an RRC message. The first message may also be referred to as an SN addition request (SN add request) message.

Correspondingly, the candidate SN receives the first message from the MN.

Step 302: The candidate SN sends a second message to the MN based on the first message.

The second message may also be referred to as an SN addition response message.

For Case 1, the second message may include an identifier of each candidate PSCell in a second candidate PSCell list, a first identifier corresponding to each candidate PSCell, and radio resource configuration information corresponding to each candidate PSCell. For description of the radio resource configuration information corresponding to the candidate PSCell, refer to the corresponding description in FIG. 1. Details are not described again.

For Case 2, the second message may include first information. The first information includes an identifier of each candidate PSCell in a second candidate PSCell list, a measurement identifier corresponding to each candidate PSCell, and radio resource configuration information corresponding to each candidate PSCell. Optionally, the first information may further include a conditional configuration identifier corresponding to each candidate PSCell in the second candidate PSCell list. It may be understood that in Case 2, if the first message does not include the conditional reconfiguration identifier corresponding to each candidate PSCell in the first candidate PSCell list, the conditional reconfiguration identifier corresponding to each candidate PSCell in the second candidate PSCell list included in the second message is determined (or generated) by the candidate SN.

In a possible implementation, the first candidate PSCell list includes the second candidate PSCell list. In other words, the candidate SN determines all or some candidate PSCells in the first candidate PSCell list as candidate PSCells in the second candidate PSCell list.

For example, the first candidate PSCell list includes the candidate PSCell 1, the candidate PSCell 2, and the candidate PSCell 3. The second candidate PSCell list may include the candidate PSCell 1, the candidate PSCell 2, and the candidate PSCell 3. Alternatively, the second candidate PSCell list may include the candidate PSCell 1 and the candidate PSCell 2. Alternatively, the second candidate PSCell list may include the candidate PSCell 1 and the candidate PSCell 3. Alternatively, the second candidate PSCell list may include the candidate PSCell 2 and the candidate PSCell 3. Alternatively, the second candidate PSCell list may include the candidate PSCell 1. Alternatively, the second candidate PSCell list may include the candidate PSCell 2. Alternatively, the second candidate PSCell list may include the candidate PSCell 3.

It may be understood that the candidate SN may determine a candidate PSCell with good signal quality in the first candidate PSCell list as a candidate PSCell in the second candidate PSCell list. Alternatively, the candidate SN may randomly determine a candidate PSCell in the first candidate PSCell list as a candidate PSCell in the second candidate PSCell list.

For example, content included in the first message is shown in Table 1, and the second candidate PSCell list includes the candidate PSCell 2 and the candidate PSCell 3. Content included in the second message may be shown in Table 3. The second message shown in Table 3 includes the candidate PSCell 2, the measurement identifier 2 corresponding to the candidate PSCell 2, the conditional reconfiguration identifier 2 corresponding to the candidate PSCell 2, the candidate PSCell 3, the measurement identifier 3 corresponding to the candidate PSCell 3, and the conditional reconfiguration identifier 3 corresponding to the candidate PSCell 3.

**Table 3**

| Identifier of a candidate PSCell | Measurement identifier corresponding to a candidate PSCell | Conditional reconfiguration identifier corresponding to a candidate PSCell |
|---|---|---|
| Candidate PSCell 2 | Measurement identifier 2 | Conditional reconfiguration identifier 2 |
| Candidate PSCell 3 | Measurement identifier 3 | Conditional reconfiguration identifier 3 |

It may be understood that Table 3 is merely an example of the second message. In actual application, the second message may alternatively be in another form. For example, the second message may alternatively be represented in a form of a set. The second message may alternatively include more or fewer rows than Table 3, and more or fewer columns than Table 3. This is not limited. For example, the second message includes fewer rows than Table 3. The second message may include a first row in Table 3, that is, the second message includes the candidate PSCell 2, the measurement identifier 2 corresponding to the candidate PSCell 2, and the conditional reconfiguration identifier 2 corresponding to the candidate PSCell 2.

It may be understood that, when the first candidate PSCell list includes one candidate PSCell, and the candidate SN determines to select the candidate PSCell, the second message includes an identifier of the candidate PSCell, a first identifier corresponding to the candidate PSCell, and radio resource configuration information corresponding to the candidate PSCell. When the first candidate PSCell list includes one candidate PSCell, and the candidate SN determines not to select the candidate PSCell, the candidate SN does not send a second message, or the candidate SN sends a second message and the second message indicates that the candidate SN determines not to select the candidate PSCell.

It may be understood that, when the first candidate PSCell list includes one candidate PSCell, and the candidate SN determines not to select the candidate PSCell, the candidate SN may send the second message to the MN after receiving a plurality of first messages. The second message indicates that the candidate SN determines not to select a candidate PSCell indicated in the plurality of first messages.

In a possible implementation, the first information is an RRC reconfiguration (RRCReconfiguration) message.

Correspondingly, the MN receives the second message from the candidate SN.

Step 303: The MN sends a third message to the terminal.

For Case 1, the third message includes the identifier of each candidate PSCell in the second candidate PSCell list, the first identifier corresponding to each candidate PSCell, and the radio resource configuration information corresponding to each candidate PSCell. In this case, after receiving the second message, the MN obtains the identifier of each candidate PSCell in the second candidate PSCell list, the first identifier corresponding to each candidate PSCell, and the radio resource configuration information corresponding to each candidate PSCell, and sends the third message to the terminal.

For Case 2, if the first information includes the conditional reconfiguration identifier corresponding to each candidate PSCell in the second candidate PSCell list, the third message includes the first information. In this case, the MN may not perceive the first information, that is, the MN does not parse the first information. After receiving the second message, the MN directly includes the first information in the second message in the third message and sends the third message to the terminal. In this way, the MN may send the third message to the terminal by using a conventional technology, without adding a new information element to indicate the first information. For example, the first information is an RRC reconfiguration message generated by the candidate SN, the MN generates an RRC reconfiguration message, and the RRC reconfiguration message generated by the MN includes the RRC reconfiguration message generated by the candidate SN. If the first information does not include the conditional reconfiguration identifier corresponding to each candidate PSCell in the second candidate PSCell list, the third message includes the identifier of each candidate PSCell in the second candidate PSCell list, the measurement identifier corresponding to each candidate PSCell, the conditional reconfiguration identifier corresponding to each candidate PSCell, and the radio resource configuration information corresponding to each candidate PSCell. The conditional reconfiguration identifier corresponding to each candidate PSCell in the second candidate PSCell list included in the third message is determined (or generated) by the MN.

It may be understood that an identifier of a candidate PSCell in the third message may be included in radio resource configuration information corresponding to the candidate PSCell.

In a possible implementation, the third message further includes the second indication information. It may be understood that the MN may trigger CPC, and the source SN may also trigger CPC. In the CPC triggered by the MN, the measurement identifier/conditional reconfiguration identifier may be determined (or generated) by the MN. In the CPC triggered by the source SN, the measurement identifier/conditional reconfiguration identifier may be determined (or generated) by the source SN. A measurement object configuration and a measurement reporting configuration corresponding to the measurement identifier/conditional reconfiguration identifier determined by the MN may be different from a measurement object configuration and a measurement reporting configuration corresponding to the measurement identifier/conditional reconfiguration identifier determined by the source SN. If the third message does not include the second indication information, after receiving the third message, the terminal does not know whether the measurement identifier in the third message is determined by the MN or the source SN, and the terminal cannot determine the measurement object configuration and the measurement reporting configuration based on the measurement identifier/conditional reconfiguration identifier.

It may be understood that, in addition to the method in this application, a method for sending the second indication information by the MN to the terminal may also be used in a conventional technology, so that the terminal determines, based on the second indication information, whether the measurement identifier sent by the MN to the terminal is determined by the MN or determined by the source SN. For example, the message 5 in Example 2 may also include the second indication information. Optionally, the message 3 and/or the message 4 in Example 2 may also include the second indication information.

Further, the second indication information may be indicated by using one information element. For example, the second indication information may be indicated by using a name of an information element or a value of an information element. For example, an information element 1 indicates that the conditional PSCell change is triggered by the MN, and an information element 2 indicates that the conditional PSCell change is triggered by the source SN. If the third message includes the information element 1, it indicates that the conditional PSCell change is triggered by the MN. If the third message includes the information element 2, it indicates that the conditional PSCell change is triggered by the source SN. For another example, the third message includes an information element 3, and a value of the information element 3 indicates whether the conditional PSCell change is triggered by the MN or the source SN. If the value of the information element 3 is 0, it indicates that the conditional PSCell change is triggered by the MN. If the value of the information element 3 is 1, it indicates that the conditional PSCell change is triggered by the source SN, and vice versa. For another example, if the third message includes an information element 4, it indicates that the conditional PSCell change is triggered by the MN; or if the third message does not include an information element 4, it indicates that the conditional PSCell change is triggered by the source SN. The second indication information may further be indicated by a choice structure in addition to a name of the information element or a value of the information element. For a description of the choice structure, refer to explanations in a conventional technology. Details are not described.

In a possible implementation, the third message is an RRC message.

Correspondingly, the terminal receives the third message from the MN.

Optionally, the terminal receives the third message, and sends a fifth message to the MN.

In one case, the fifth message indicates, to the MN, that the terminal receives the third message. It may be understood that the fifth message does not include a message sent by the terminal to the source SN and/or the candidate SN. After receiving the fifth message, the MN may determine a sixth message based on the fifth message, and send the sixth message to a first SN. The sixth message indicates that the terminal receives the third message or indicates that the terminal receives a CPA configuration or a CPC configuration. The first SN includes at least one SN of the source SN and the candidate SN.

In another case, the fifth message indicates that the terminal receives the third message. The fifth message includes a message sent by the terminal to a first SN. After receiving the fifth message, the MN forwards, to the first SN, the message sent by the terminal to the first SN.

In a possible implementation, after receiving the third message, the terminal performs conditional PSCell change based on the third message. Further, after receiving the third message, the terminal determines a measurement object configuration and a measurement reporting configuration of each candidate PSCell in the second candidate PSCell list based on the third message. The terminal further detects a change condition indicated by the measurement reporting configuration corresponding to each candidate PSCell, and when detecting at least one candidate PSCell that meets the change condition, selects one of the candidate PSCells, and uses a radio resource configuration of the candidate PSCell.

Further, that the terminal determines a measurement object configuration and a measurement reporting configuration of each candidate PSCell in the second candidate PSCell list based on the third message includes: If the third message includes a first identifier, and the first identifier includes a measurement identifier or the first identifier includes a measurement identifier and a conditional reconfiguration identifier, the terminal determines the measurement object configuration and the measurement reporting configuration of each candidate PSCell in the second candidate PSCell list based on the measurement identifier. If the third message includes a first identifier, and the first identifier includes a conditional reconfiguration identifier, the terminal determines a measurement identifier corresponding to the conditional reconfiguration identifier based on the conditional reconfiguration identifier, and determines the measurement object configuration and the measurement reporting configuration of each candidate PSCell in the second candidate PSCell list based on the measurement identifier. If the third message includes the first information, the terminal determines the measurement object configuration and the measurement reporting configuration of each candidate PSCell in the second candidate PSCell list based on the measurement identifier.

In a possible implementation, after the terminal receives the third message, the source SN or the candidate SN triggers release of the measurement object configuration, and/or the measurement reporting configuration, and/or the radio resource configuration information corresponding to the candidate PSCell in the second candidate PSCell list. In this way, storage overheads of the source SN, the candidate SN, and the terminal can be reduced, and resource utilization can also be improved, so that the source SN or the candidate SN configures the released resource for another terminal.

For example, the source SN triggers release of a measurement object configuration, and/or a measurement reporting configuration, and/or radio resource configuration information corresponding to a first candidate PSCell. The first candidate PSCell is any one or more candidate PSCells in the second candidate PSCell list. The source SN sends an eighth message to the MN. The eighth message indicates to release the measurement object configuration, and/or the measurement reporting configuration, and/or the radio resource configuration information corresponding to the first candidate PSCell, and the eighth message includes an identifier of the first candidate PSCell and/or a conditional reconfiguration identifier corresponding to the first candidate PSCell. After receiving the eighth message, the MN sends a ninth message to the terminal, and sends a tenth message to the candidate SN. The ninth message indicates to release the measurement object, and/or the measurement reporting configuration, and/or the radio resource configuration information configuration corresponding to the first candidate PSCell, and the tenth message indicates to release the radio resource configuration information corresponding to the first candidate PSCell.

For example, the candidate SN triggers release of the measurement object configuration, and/or the measurement reporting configuration, and/or the radio resource configuration information corresponding to the first candidate PSCell. The candidate SN sends an eleventh message to the MN. The eleventh message indicates to release the measurement object configuration, and/or the measurement reporting configuration, and/or the radio resource configuration information corresponding to the first candidate PSCell. The eleventh message includes the identifier of the first candidate PSCell and/or the conditional reconfiguration identifier corresponding to the first candidate PSCell, or the eleventh message includes an index of the first candidate PSCell. After the MN receives the eleventh message, the MN can determine, based on content of the eleventh message, that a CPC configuration of the first candidate PSCell needs to be released, send a twelfth message to the terminal, and send a thirteenth message to the source SN. The twelfth message indicates to release the measurement object configuration, and/or the measurement reporting configuration, and/or the radio resource configuration information corresponding to the first candidate PSCell. The thirteenth message indicates to release the measurement object configuration corresponding to the first candidate PSCell. It may be understood that, if the eleventh message includes the index of the first candidate PSCell, the first message also includes the index of the first candidate PSCell. In this case, when the candidate SN needs to release the CPC configuration corresponding to the first candidate PSCell, the candidate SN only needs to send the index of the first candidate PSCell to the MN.

For example, the MN triggers release of the measurement object configuration, and/or the measurement reporting configuration, and/or the radio resource configuration information corresponding to the first candidate PSCell. The MN sends a fourteenth message to the candidate SN. The fourteenth message indicates to release the radio resource configuration information corresponding to the first candidate PSCell. The fourteenth message includes the identifier of the first candidate PSCell and/or the conditional reconfiguration identifier corresponding to the first candidate PSCell, or the fourteenth message includes an index of the first candidate PSCell. The MN sends a fifteenth message to the terminal, and sends a sixteenth message to the source SN. The fifteenth message indicates to release the measurement object configuration, and/or the measurement reporting configuration, and/or the radio resource configuration information corresponding to the first candidate PSCell, and the sixteenth message indicates to release the measurement object configuration and/or the measurement reporting configuration corresponding to the first candidate PSCell.

It may be understood that, if the fourteenth message includes the index of the first candidate PSCell, the first message also includes the index of the first candidate PSCell. In this case, when the MN needs to release the CPC configuration corresponding to the first candidate PSCell, the MN only needs to send the index of the first candidate PSCell to the candidate SN.

In a possible implementation, after receiving the third message, the terminal determines, based on a change condition of a candidate PSCell, whether the candidate PSCell meets the change condition. When a change condition of at least one PSCell is met, one of the at least one PSCell that meet the condition is selected, and a radio resource configuration of the candidate PSCell is used. Subsequently, the terminal may send a message to the MN. The message carries indication information, and the indication information includes a conditional reconfiguration identifier corresponding to the candidate PSCell selected by the terminal, or an identifier of the candidate PSCell selected by the terminal. It should be understood that, compared with the identifier of the candidate PSCell, the conditional reconfiguration identifier corresponding to the candidate PSCell requires fewer bits. Therefore, compared with a case in which the indication information includes the identifier of the candidate PSCell selected by the terminal, in a case in which the indication information includes the conditional reconfiguration identifier corresponding to the candidate PSCell selected by the terminal, signaling overheads are further reduced. After receiving the message, the MN may determine, based on the indication information, the candidate PSCell selected by the terminal.

Further, the MN may send, based on the candidate PSCell selected by the terminal, a message to an SN corresponding to the candidate PSCell. The message is used to notify the SN corresponding to the candidate PSCell that the terminal has selected the candidate PSCell in the SN or the candidate PSCell in the SN meets a PSCell change condition. After the terminal selects the candidate PSCell, the terminal initiates random access to the candidate PSCell, and after the random access to the candidate PSCell succeeds, establishes dual connections to the MN and the SN corresponding to the candidate PSCell. It may be understood that a quantity of first messages, second messages, or third messages is not limited in this embodiment of this application. In other words, the MN may send a plurality of first messages to the candidate SN, the candidate SN may send a plurality of second messages to the MN, and the MN may send a plurality of third messages to the terminal. For example, the MN sends a plurality of third messages to the terminal. Each third message corresponds to related information of one or more candidate PSCells of one candidate SN (for example, identifiers of the one or more candidate PSCells, first identifiers corresponding to the one or more candidate PSCells, and radio resource configuration information corresponding to the one or more candidate PSCells). It may be understood that, if the MN sends one third message to the terminal, the third message may include related information of a candidate PSCell of each of the plurality of candidate SNs.

According to the method shown in FIG. 3, the MN may determine the first message, and send the first message to the candidate SN. After receiving the first message, the candidate SN may select a candidate PSCell (that is, a candidate PSCell in the second candidate PSCell list) from the first candidate PSCell list, and send the second message to the MN. After receiving the second message, the MN includes all or some messages in the second message in the third message and sends the third message to the terminal, so that the terminal performs CPC based on the third message. The MN does not need to store related information (for example, the identifier of each candidate PSCell in the first candidate PSCell list, the first identifier corresponding to each candidate PSCell, and the measurement identifier corresponding to each candidate PSCell) in the first message corresponding to the candidate PSCell, to reduce storage overheads of the MN. The MN does not need to associate a first identifier corresponding to a candidate PSCell in the second candidate PSCell list with radio resource configuration information corresponding to the candidate PSCell based on an identifier of the candidate PSCell, to simplify a processing process of the MN, reduce overheads of the NM, and shorten time for the terminal to perform CPC. In addition, the candidate PSCell in the second candidate PSCell list is selected from the first candidate PSCell list for processing. After receiving the second message, the MN includes all or a part of content in the second message in the third message and sends the third message to the terminal, so that a problem that radio resource configuration information corresponding to the candidate PSCell cannot be determined does not occur.

The method shown in FIG. 3 is described by using an example in which the MN triggers CPC. The following describes a communication method provided in an embodiment of this application by using an example in which the source SN triggers CPC.

FIG. 4 shows another communication method according to an embodiment of this application. The communication method is described by using an example in which a source SN triggers CPC. The CPC may be inter-SN CPC (inter-SN CPC) or intra-SN CPC (intra-SN CPC). The communication method includes step 401 to step 404.

Step 401: The source SN sends a fourth message to an MN.

The source SN may be referred to as a source secondary node, a source secondary base station, or the like. The source SN is an SN currently connected to a terminal. The source SN may be the network device 101 or the network device 102 in FIG. 1. The terminal may be the terminal 103 or the terminal 104 in FIG. 1.

The MN may be referred to as a master node, a master base station, or the like. If the source SN is the network device 101 in FIG. 1, the MN may be the network device 102 in FIG. 1; or if the source SN is the network device 102 in FIG. 1, the MN may be the network device 101 in FIG. 1.

In a possible implementation, the source SN determines the fourth message, and sends the fourth message to the MN. The fourth message may also be referred to as an SN change request (SN change required) message. The fourth message may have the following two cases:

Case 3: The fourth message includes an identifier of each candidate PSCell in a first candidate PSCell list, and a first identifier corresponding to each candidate PSCell.

The first candidate PSCell list includes at least one candidate PSCell configured (or recommended) by the source SN for the terminal. The at least one candidate PSCell is a cell of one candidate SN, or may be a cell of a plurality of candidate SNs. The candidate SN is configured by the source SN for the terminal. A quantity of candidate SNs is not limited in this application. The candidate SN may be the network device 105 in FIG. 1. For descriptions of the first identifier, refer to corresponding descriptions in the method shown in FIG. 3. A difference lies in that the first identifier in the method shown in FIG. 4 is determined (or generated) by the source SN.

Further, the at least one candidate PSCell is a PSCell with good signal quality detected by the source SN, or a PSCell selected by the source SN according to a preset algorithm. In this embodiment of this application, any candidate PSCell list may also be referred to as a candidate PSCell set, and is used to represent one or more candidate PSCells.

Case 4: The fourth message includes an identifier of each candidate PSCell in a first candidate PSCell list, and a measurement identifier corresponding to each candidate PSCell. Further, optionally, the fourth message further includes a conditional reconfiguration identifier corresponding to each candidate PSCell in the first candidate PSCell list. The measurement identifier and the conditional reconfiguration identifier are determined (or generated) by the source SN.

In a possible implementation, in addition to determining the measurement identifier and/or the conditional reconfiguration identifier, the source SN further needs to determine a measurement object identifier and a measurement reporting configuration identifier that are associated with the measurement identifier. In other words, the source SN may further determine a measurement object configuration and a measurement reporting configuration corresponding to a candidate PSCell. For descriptions of the measurement object configuration and the measurement reporting configuration, refer to corresponding descriptions in FIG. 1. Details are not described again.

Further, before step 303, the source SN may directly send a seventeenth message to the terminal, or send the seventeenth message to the terminal through the MN. The seventeenth message indicates a measurement identifier, and a measurement object identifier and a measurement reporting configuration identifier that are associated with the measurement identifier, so that after receiving the thirteenth message, the terminal determines a measurement object configuration and a measurement reporting configuration corresponding to the measurement identifier based on the thirteenth message.

In a possible implementation, the fourth message further includes first indication information, so that the MN determines that the source SN triggers conditional PSCell change. The first indication information indicates that the source SN triggers the conditional PSCell change.

Correspondingly, the MN receives the fourth message from the source SN.

Step 402: The MN sends a first message to the candidate SN.

It may be understood that when there are a plurality of candidate SNs, the MN sends the first message to each candidate SN. The first message may also be referred to as an SN addition request (SN add request) message.

In Case 3, the first message has the following two cases:

Case 3.1: The first message may include the identifier of each candidate PSCell in the first candidate PSCell list, and the first identifier corresponding to each candidate PSCell.

Case 3.2: The first message may include identifiers of some candidate PSCells in the first candidate PSCell list, and first identifiers corresponding to these candidate PSCells.

In Case 4, the first message has the following three cases:

Case 4.1: The first message includes the identifier of each candidate PSCell in the first candidate PSCell list, and the measurement identifier corresponding to each candidate PSCell. Further, optionally, the first message further includes the conditional reconfiguration identifier corresponding to each candidate PSCell in the first candidate PSCell list.

Case 4.2: The first message may include identifiers of some candidate PSCells in the first candidate PSCell list, and measurement identifiers corresponding to these candidate PSCells. Further, optionally, the first message further includes conditional reconfiguration identifiers corresponding to these candidate PSCells.

Case 4.3: The first message includes identifiers of some or all candidate PSCells in the first candidate PSCell list. Further, optionally, the first message further includes conditional reconfiguration identifiers corresponding to these candidate PSCells.

In a possible implementation, the first message further includes the first indication information, so that the candidate SN determines that the source SN triggers conditional PSCell change.

Correspondingly, the candidate SN receives the first message from the MN.

Step 403: The candidate SN sends a second message to the MN based on the first message.

The second message may also be referred to as an SN addition response message.

For Cases 3.1 and 3.2, the second message may include an identifier of each candidate PSCell in a second candidate PSCell list, a first identifier corresponding to each candidate PSCell, and radio resource configuration information corresponding to each candidate PSCell. For description of the radio resource configuration information corresponding to the candidate PSCell, refer to the corresponding description in FIG. 1. Details are not described again.

For Cases 4.1 and 4.2, the second message may include first information. The first information includes an identifier of each candidate PSCell in a second candidate PSCell list, a measurement identifier corresponding to each candidate PSCell, and radio resource configuration information corresponding to each candidate PSCell. Optionally, the first information may further include a conditional configuration identifier corresponding to each candidate PSCell in the second candidate PSCell list.

For Case 4.3, the second message may include first information. The first information includes an identifier of each candidate PSCell in a second candidate PSCell list and radio resource configuration information corresponding to each candidate PSCell. Optionally, the first information may further include a conditional configuration identifier corresponding to each candidate PSCell in the second candidate PSCell list.

For descriptions of the second message, the second candidate PSCell list, and the first candidate PSCell list, refer to corresponding descriptions in the method shown in FIG. 3. Details are not described again.

In a possible implementation, the first information is an RRC reconfiguration (RRCReconfiguration) message.

Correspondingly, the MN receives the second message from the candidate SN.

Step 404: The MN sends a third message to the terminal.

For Cases 3.1 and 3.2, the second message may include the identifier of each candidate PSCell in the second candidate PSCell list, the first identifier corresponding to each candidate PSCell, and the radio resource configuration information corresponding to each candidate PSCell. In this case, after receiving the second message, the MN obtains the identifier of each candidate PSCell in the second candidate PSCell list, the first identifier corresponding to each candidate PSCell, and the radio resource configuration information corresponding to each candidate PSCell, and sends the third message to the terminal.

For Cases 4.1 and 4.2, if the first information includes the conditional reconfiguration identifier corresponding to each candidate PSCell in the second candidate PSCell list, the third message includes the first information. In this case, the MN may not perceive the first information, that is, the MN does not parse the first information. After receiving the second message, the MN directly includes the first information in the second message in the third message and sends the third message to the terminal. In this way, the MN may send the third message to the terminal by using a conventional technology, without adding a new information element to indicate the first information. For example, the first information is an RRC reconfiguration message generated by the candidate SN, the MN generates an RRC reconfiguration message, and the RRC reconfiguration message generated by the MN includes the RRC reconfiguration message generated by the SN. If the first information does not include the conditional reconfiguration identifier corresponding to each candidate PSCell in the second candidate PSCell list, the third message includes the identifier of each candidate PSCell in the second candidate PSCell list, the measurement identifier corresponding to each candidate PSCell, the conditional reconfiguration identifier corresponding to each candidate PSCell, and the radio resource configuration information corresponding to each candidate PSCell. The conditional reconfiguration identifier corresponding to each candidate PSCell in the second candidate PSCell list included in the third message is determined (or generated) by the MN.

For Case 4.3, the third message includes the identifier of each candidate PSCell in the second candidate PSCell list and the radio resource configuration information corresponding to each candidate PSCell. The MN may find a measurement identifier corresponding to the candidate PSCell from the fourth message based on the identifier of each candidate PSCell in the third message. Further, if the first candidate PSCell list in the fourth message further includes a conditional reconfiguration identifier corresponding to each candidate PSCell, the MN may further find, from the fourth message, a conditional reconfiguration identifier corresponding to each candidate PSCell in the second candidate PSCell list. If the first candidate PSCell list in the fourth message does not include a conditional reconfiguration identifier corresponding to each candidate PSCell, the MN may generate a conditional reconfiguration identifier for each candidate PSCell in the second candidate PSCell list, or the second candidate PSCell list includes a conditional reconfiguration identifier of each candidate PSCell. According to the foregoing method, the MN may obtain the measurement identifier corresponding to each candidate PSCell in the second candidate PSCell list, and the conditional reconfiguration identifier corresponding to each candidate PSCell. Then, the MN sends the third message to the terminal device. The third message includes the identifier of each candidate PSCell in the second candidate PSCell list, the measurement identifier corresponding to each candidate PSCell, the conditional reconfiguration identifier corresponding to each candidate PSCell, and the radio resource configuration information corresponding to each candidate PSCell.

It may be understood that an identifier of a candidate PSCell in the third message may be included in radio resource configuration information corresponding to the candidate PSCell.

In a possible implementation, the third message further includes the first indication information. It may be understood that the MN may trigger CPC, and the source SN may also trigger CPC. In the CPC triggered by the MN, the measurement identifier/conditional reconfiguration identifier may be determined (or generated) by the MN. In the CPC triggered by the source SN, the measurement identifier/conditional reconfiguration identifier may be determined (or generated) by the source SN. A measurement object configuration and a measurement reporting configuration corresponding to the measurement identifier/conditional reconfiguration identifier determined by the MN may be different from a measurement object configuration and a measurement reporting configuration corresponding to the measurement identifier/conditional reconfiguration identifier determined by the source SN. If the third message does not include the first indication information, after receiving the third message, the terminal does not know whether the measurement identifier in the third message is determined by the MN or the source SN, and the terminal cannot determine the measurement object configuration and the measurement reporting configuration based on the measurement identifier/conditional reconfiguration identifier.

It may be understood that, in addition to the method in this application, a method for sending the first indication information by the MN to the terminal may also be used in a conventional technology, so that the terminal determines, based on the first indication information, whether the measurement identifier sent by the MN to the terminal is determined by the MN or determined by the source SN. Therefore, the terminal may determine, based on the first indication information, whether a candidate PSCell change condition corresponding to the measurement identifier is configured by the MN or configured by the SN, and the terminal determines the candidate PSCell change condition based on a measurement object configuration and a measurement reporting configuration that are configured by the MN or the SN and that correspond to the measurement identifier. For example, the message 8 in Example 3 may also include the first indication information. Optionally, the message 6 and/or the message 7 in Example 3 may also include the first indication information.

Further, the first indication information may be indicated by using one information element. For example, the first indication information may be indicated by using a name of an information element or a value of an information element.

In a possible implementation, the third message is an RRC message.

Correspondingly, the terminal receives the third message from the MN.

For a description after the terminal receives the third message, refer to corresponding descriptions in the method shown in FIG. 3. Details are not described again.

It may be understood that a quantity of first messages, second messages, third messages, or fourth messages is not limited in this embodiment of this application. In other words, the source SN may send a plurality of fourth messages to the MN, the MN may also send a plurality of first messages to the source SN, the source SN may also send a plurality of second messages to the MN, and the MN may send a plurality of third messages to the terminal. For example, the source SN sends a plurality of fourth messages to the MN, and each fourth message corresponds to related information of one or more candidate PSCells of one candidate SN (for example, identifiers of the one or more candidate PSCells, and first identifiers corresponding to the one or more candidate PSCells). It may be understood that, if the source SN sends one fourth message to the MN, the fourth message may include related information of a candidate PSCell of each of the plurality of candidate SNs.

According to the method shown in FIG. 4, the MN may receive the fourth message from the source SN, and send the first message to the candidate SN based on the fourth message. After receiving the first message, the candidate SN may select a candidate PSCell (that is, a candidate PSCell in the second candidate PSCell list) from the first candidate PSCell list, and send the second message to the MN. After receiving the second message, the MN includes all or some messages in the second message in the third message and sends the third message to the terminal, so that the terminal performs CPC based on the third message. The MN does not need to store related information (for example, the identifier of each candidate PSCell in the first candidate PSCell list, the first identifier corresponding to each candidate PSCell, and the measurement identifier corresponding to each candidate PSCell) in the fourth message corresponding to the candidate PSCell, to reduce storage overheads of the MN. The MN does not need to associate a first identifier corresponding to a candidate PSCell in the second candidate PSCell list with radio resource configuration information corresponding to the candidate PSCell based on an identifier of the candidate PSCell, to simplify a processing process of the MN, reduce overheads of the NM, and shorten time for the terminal to perform CPC. In addition, the candidate PSCell in the second candidate PSCell list is selected from the first candidate PSCell list for processing. After receiving the second message, the MN includes all or a part of content in the second message in the third message and sends the third message to the terminal, so that a problem that radio resource configuration information or a measurement identifier corresponding to a candidate PSCell cannot be determined does not occur.

In the method shown in FIG. 3, the communication method provided in this embodiment of this application is described by using an example in which the MN triggers CPC. In the method shown in FIG. 4, the communication method provided in this embodiment of this application is described by using an example in which the source SN triggers CPC. In the method shown in FIG. 3 or FIG. 4, after receiving the third message from the MN, the terminal may further send a fifth message to the MN. The fifth message indicates that the terminal receives the third message. Similarly, in the process of performing CPA, after receiving, from the MN, a message 1 indicating an addition condition and a configuration of a candidate PSCell, the terminal may also send, to the MN, a message 2 indicating that the message 1 is received. The following describes a processing method of the terminal after the terminal receives, from the MN, a message indicating an addition/change condition and a configuration of a candidate PSCell.

FIG. 5 shows still another communication method according to an embodiment of this application. The communication method may be used in a conditional PSCell addition/change triggered by an MN, or the communication method may be used in inter-SN CPC triggered by a source SN, or the communication method may be used in intra-SN CPC triggered by a source SN. The communication method includes step 501 to step 503.

Step 501: The MN sends a first message to a terminal.

The MN may be referred to as a master node, a master base station, or the like. The MN may be the network device 101 or the network device 102 in FIG. 1. The terminal may be the terminal 103 or the terminal 104 in FIG. 1.

In a possible implementation, the first message indicates an addition/change condition and a radio resource configuration of each candidate PSCell in a candidate PSCell list. The candidate PSCell list includes at least one candidate PSCell configured by the MN or the source SN for the terminal. The at least one candidate PSCell is a cell of one candidate SN, or may be a cell of a plurality of candidate SNs.

The candidate SN is configured by the source SN or the MN for the terminal. A quantity of candidate SNs is not limited in this application. The candidate SN may be the network device 105 in FIG. 1. The candidate SN may be referred to as a candidate secondary node, a candidate secondary base station, or the like.

The source SN may be referred to as a source secondary node, a source secondary base station, or the like. The source SN is an SN currently connected to the terminal. If the MN is the network device 101 in FIG. 1, the source SN may be the network device 102 in FIG. 1; or if the MN is the network device 102 in FIG. 1, the source SN may be the network device 101 in FIG. 1.

For example, the first message includes an identifier of each candidate PSCell in the candidate PSCell list, a first identifier corresponding to each candidate PSCell, and radio resource configuration information corresponding to each candidate PSCell. For descriptions of the first identifier corresponding to the candidate PSCell and the radio resource configuration information corresponding to the candidate PSCell, refer to corresponding descriptions in the method shown in FIG. 3. Details are not described again.

In a possible implementation, the first message further includes the first indication information. The first indication information indicates that the source SN triggers the conditional PSCell change, or indicates that the MN triggers the conditional PSCell change.

In a possible implementation, the first message is an RRC message.

Correspondingly, the terminal receives the first message from the MN.

In a possible implementation, after the terminal receives the first message, the terminal determines, based on an addition condition or a change condition of the candidate PSCell, whether the terminal device meets the condition. When a change condition of at least one PSCell is met, one of the at least one PSCell that meet the condition is selected, and a radio resource configuration of the candidate PSCell is used. Subsequently, the terminal may send a message to the MN. The message carries indication information, and the indication information includes a conditional reconfiguration identifier corresponding to the candidate PSCell selected by the terminal, or an identifier of the candidate PSCell selected by the terminal. It should be understood that, compared with the identifier of the candidate PSCell, the conditional reconfiguration identifier corresponding to the candidate PSCell requires fewer bits. Therefore, compared with a case in which the indication information includes the identifier of the candidate PSCell selected by the terminal, in a case in which the indication information includes the conditional reconfiguration identifier corresponding to the candidate PSCell selected by the terminal, signaling overheads are further reduced. After receiving the message, the MN may determine, based on the indication information, the candidate PSCell selected by the terminal.

Further, the MN may send, based on the candidate PSCell selected by the terminal, a message to an SN corresponding to the candidate PSCell. The message is used to notify the SN corresponding to the candidate PSCell that the terminal has selected the candidate PSCell in the SN or the candidate PSCell in the SN meets a PSCell change condition. After the terminal selects the candidate PSCell, the terminal initiates random access to the candidate PSCell, and after the random access to the candidate PSCell succeeds, establishes dual connections to the MN and the SN corresponding to the candidate PSCell. Step 502: The terminal sends a second message to the MN.

In a possible implementation, when detecting at least one candidate PSCell that meets an addition/change condition, the terminal sends the second message to the MN. The second message may have the following two cases:

Case 5: The second message indicates, to the MN, that the terminal receives the first message. It may be understood that the second message does not include a message sent by the terminal to the source SN and/or the candidate SN.

Case 6: The second message indicates that the terminal receives the first message. The second message includes a message sent by the terminal to a first SN.

In a possible implementation, the second message is an RRC message.

Correspondingly, the MN receives the second message from the terminal.

Step 503: The MN sends a third message to the first SN based on the second message.

In a possible implementation, when the first message indicates the addition condition and the radio resource configuration of each candidate PSCell in the candidate PSCell list, the first SN is at least one of candidate SNs determined by the MN for the terminal. When the first message indicates a change condition and a radio resource configuration of each candidate PSCell in the candidate PSCell list, the first SN is at least one of candidate SNs determined by the MN or the source SN for the terminal and the source SN.

For Case 5, after receiving the second message, the MN may determine the third message based on the second message, and send the third message to the first SN. The third message indicates that the terminal receives the first message or indicates that the terminal receives a CPA configuration or a CPC configuration.

For Case 6, after receiving the second message, the MN forwards, to the first SN, the message sent by the terminal to the first SN.

Correspondingly, the first SN receives the third message from the MN. After receiving the third message, the first SN may determine, based on the third message, that the terminal receives the first message or that the terminal receives the CPA configuration or the CPC configuration.

It may be understood that an identifier of a candidate PSCell in the third message may be included in radio resource configuration information corresponding to the candidate PSCell.

In a possible implementation, after receiving the third message, the first SN triggers release of the measurement object configuration, and/or the measurement reporting configuration, and/or the radio resource configuration information corresponding to the candidate PSCell in the candidate PSCell list. For details, refer to the corresponding description in the method shown in FIG. 3. Details are not described again.

According to the method shown in FIG. 5, after receiving the first message indicating the addition/change condition and the radio resource configuration of each candidate PSCell in the candidate PSCell list, the terminal may send the second message to the MN. The second message may not include a message sent by the terminal to the first SN. After receiving the second message, the MN may determine (or generate) the third message based on the second message, and send the third message to the first SN, so that the first SN determines that the terminal receives the first message.

The foregoing mainly describes the solutions provided in embodiments of this application from a perspective of interaction between network elements. It may be understood that, to implement the foregoing functions, the MN, the candidate SN, the source SN, the terminal, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into function modules may be performed on the MN, the candidate SN, the source SN, or the terminal based on the foregoing method examples. For example, each functional module may be obtained through division for each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

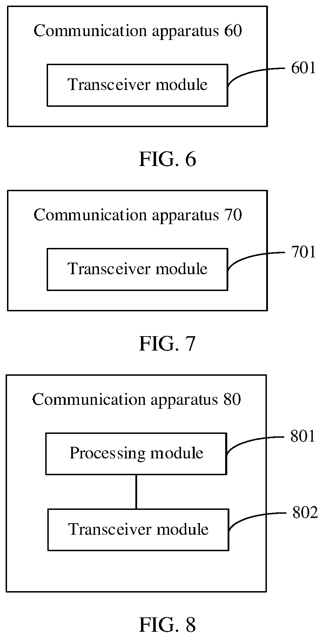

For example, when the functional modules are obtained through division in an integrated manner, FIG. 6 is a schematic diagram of a structure of a communication apparatus 60. The communication apparatus 60 includes a transceiver module 601.

For example, the communication apparatus 60 may be configured to implement a function of an MN. The communication apparatus 60 is, for example, the MN in the embodiment shown in FIG. 3 or the embodiment shown in FIG. 4.

For example, the communication apparatus 60 may be an MN, or may be a chip used in the MN, or another combined device or component having the foregoing function of the MN. When the communication apparatus 60 is an MN, the transceiver module 601 may be a transceiver, and the transceiver may include an antenna, a radio frequency circuit, and the like. When the communication apparatus 60 is a component having the foregoing function of the MN, the transceiver module 601 may be a radio frequency unit. When the communication apparatus 60 is a chip system, the transceiver module 601 may be an input/output interface of a chip (for example, a baseband chip). It should be understood that the transceiver module 601 in this embodiment of this application may be implemented by a transceiver or a transceiver-related circuit component.

For example, the transceiver module 601 may be configured to perform all the receiving and sending operations performed by the MN in the embodiment shown in FIG. 3, for example, step 301, step 302, and step 303, and/or configured to support another process of the technology described in this specification.

For another example, the transceiver module 601 may be configured to perform all the receiving and sending operations performed by the MN in the embodiment shown in FIG. 4, for example, step 401, step 402, step 403, and step 404, and/or configured to support another process of the technology described in this specification.

The transceiver module 601 is configured to send a first message to a candidate SN. The first message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier.

The transceiver module 601 is further configured to receive a second message from the candidate SN. The second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

The transceiver module 601 is further configured to send a third message to the terminal. The third message includes the identifier of each candidate PSCell in the second candidate PSCell list, the first identifier corresponding to each candidate PSCell, and the radio resource configuration information corresponding to each candidate PSCell.

In a possible implementation, the first identifier includes a measurement identifier and/or a conditional reconfiguration identifier.

In a possible implementation, the transceiver module 601 is further configured to receive a fourth message from a source SN. The fourth message includes the identifier of each candidate PSCell in the first candidate PSCell list and the first identifier corresponding to each candidate PSCell, and the first candidate PSCell list includes at least one candidate PSCell configured by the source SN for the terminal.

In a possible implementation, the third message further includes first indication information, and the first indication information indicates that conditional PSCell change is triggered by the source SN.

In a possible implementation, the first candidate PSCell list includes at least one candidate PSCell configured by the communication apparatus 60 for the terminal, and the first identifier is determined by the communication apparatus 60.

In a possible implementation, the third message further includes second indication information, and the second indication information indicates that the conditional PSCell change is triggered by the communication apparatus 60.

In a possible implementation, the transceiver module 601 is further configured to receive a fifth message from the terminal. The fifth message indicates, to the communication apparatus 60, that the terminal receives the third message. The transceiver module 601 is further configured to send a sixth message to a first SN based on the fifth message. The sixth message indicates that the terminal receives the third message, and the first SN includes at least one of the source SN and the candidate SN.

Alternatively, the transceiver module 601 is configured to send a first message to a candidate SN. The first message includes an identifier of each candidate PSCell in a first candidate PSCell list and a measurement identifier corresponding to each candidate PSCell.

The transceiver module 601 is configured to receive a second message from the candidate SN. The second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

The transceiver module 601 is configured to send a third message to a terminal. The third message includes the first information.

In a possible implementation, the transceiver module 601 is further configured to receive a fourth message from a source SN. The fourth message includes the identifier of each candidate PSCell in the first candidate PSCell list and the measurement identifier corresponding to each candidate PSCell, and the first candidate PSCell list includes at least one candidate PSCell configured by the source SN for the terminal.

In a possible implementation, the first message further includes a conditional reconfiguration identifier corresponding to each candidate PSCell in the first candidate PSCell list, and the fourth message further includes the conditional reconfiguration identifier corresponding to each candidate PSCell in the first candidate PSCell list.

In a possible implementation, the third message further includes first indication information, and the first indication information indicates that conditional PSCell change is triggered by the source SN.

In a possible implementation, the first candidate PSCell list includes at least one candidate PSCell configured by the communication apparatus 60 for the terminal, and the measurement identifier is determined by the communication apparatus 60.

In a possible implementation, the third message further includes second indication information, and the second indication information indicates that the conditional PSCell change is triggered by the communication apparatus 60.

In a possible implementation, the transceiver module 601 is further configured to receive a fifth message from the terminal. The fifth message indicates, to the communication apparatus 60, that the terminal receives the third message. The transceiver module 601 is further configured to send a sixth message to a first SN based on the fifth message. The sixth message indicates that the terminal receives the third message, and the first SN includes at least one of the source SN and the candidate SN.

When the communication apparatus 60 is configured to implement a function of the MN, for another function that can be implemented by the communication apparatus 60, refer to related descriptions of the embodiment shown in FIG. 3 or the method embodiment shown in FIG. 4. Details are not described again.

For example, when the functional modules are obtained through division in an integrated manner, FIG. 7 is a schematic diagram of a structure of a communication apparatus 70. The communication apparatus 70 includes a transceiver module 701.

For example, the communication apparatus 70 may be configured to implement a function of a candidate SN. The communication apparatus 70 is, for example, the candidate SN in the embodiment shown in FIG. 3 or the embodiment shown in FIG. 4.

For example, the communication apparatus 70 may be a candidate SN, or may be a chip used in the candidate SN, or another combined device or component having the foregoing function of the candidate SN. When the communication apparatus 70 is a candidate SN, the transceiver module 701 may be a transceiver, and the transceiver may include an antenna, a radio frequency circuit, and the like. When the communication apparatus 70 is a component having the foregoing function of the candidate SN, the transceiver module 701 may be a radio frequency unit. When the communication apparatus 70 is a chip system, the transceiver module 701 may be an input/output interface of a chip (for example, a baseband chip). It should be understood that the transceiver module 701 in this embodiment of this application may be implemented by a transceiver or a transceiver-related circuit component.

For example, the transceiver module 701 may be configured to perform all the receiving and sending operations performed by the candidate SN in the embodiment shown in FIG. 3, for example, step 301 and step 302, and/or configured to support another process of the technology described in this specification.

For another example, the transceiver module 701 may be configured to perform all the receiving and sending operations performed by the candidate SN in the embodiment shown in FIG. 4, for example, step 402 and step 403, and/or configured to support another process of the technology described in this specification.

The transceiver module 701 is configured to receive a first message from an MN. The first message includes an identifier of each candidate PSCell in a first candidate PSCell list and a first identifier corresponding to each candidate PSCell, and the first identifier indicates a condition for changing a PSCell currently connected to a terminal to a candidate PSCell corresponding to the first identifier.

The transceiver module 701 is further configured to send a second message to the MN based on the first message. The second message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

In a possible implementation, the first identifier includes a measurement identifier and/or a conditional reconfiguration identifier.

In a possible implementation, the transceiver module 701 is further configured to receive a sixth message from the MN. The sixth message indicates that the terminal receives a third message, the third message is a message sent by the MN to the terminal, and the third message includes the identifier of each candidate PSCell in the second candidate PSCell list, the first identifier corresponding to each candidate PSCell, and the radio resource configuration information corresponding to each candidate PSCell.

Alternatively, the transceiver module 701 is configured to receive a first message from an MN. The first message includes an identifier of each candidate PSCell in a first candidate PSCell list and a measurement identifier corresponding to each candidate PSCell.

The transceiver module 701 is further configured to send a second message to the MN based on the first message. The second message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

In a possible implementation, the first message further includes a conditional reconfiguration identifier corresponding to each candidate PSCell in the first candidate PSCell list.

In a possible implementation, the transceiver module 701 is further configured to receive a sixth message from the MN. The sixth message indicates that the terminal receives a third message, the third message is a message sent by the MN to the terminal, and the third message includes the first information.

When the communication apparatus 70 is configured to implement a function of the candidate SN, for another function that can be implemented by the communication apparatus 70, refer to related descriptions of the embodiment shown in FIG. 3 or the method embodiment shown in FIG. 4. Details are not described again.

For example, when the functional modules are obtained through division in an integrated manner, FIG. 8 is a schematic diagram of a structure of a communication apparatus 80. The communication apparatus 80 includes a processing module 801 and a transceiver module 802.

For example, the communication apparatus 80 is configured to implement a function of a source secondary node. For example, the communication apparatus 80 is the source secondary node in the embodiment shown in FIG. 4.

For example, the communication apparatus 80 may be a source secondary node, or may be a chip used in the source secondary node, or another combined device or component having the foregoing function of the source secondary node. When the communication apparatus 80 is the source secondary node, the processing module 801 may be a processor (or a processing circuit), for example, a baseband processor. The baseband processor may include one or more CPUs. The transceiver module 802 may be a transceiver, and the transceiver may include an antenna, a radio frequency circuit, and the like. When the communication apparatus 80 is a component having the foregoing function of the source secondary node, the processing module 801 may be a processor (or a processing circuit), for example, a baseband processor. The transceiver module 802 may be a radio frequency unit. When the communication apparatus 80 is a chip system, the processing module 801 may be a processor (or a processing circuit) of the chip system, and may include one or more central processing units. The transceiver module 802 may be an input/output interface of a chip (for example, a baseband chip). It should be understood that the processing module 801 in this embodiment of this application may be implemented by a processor or a processor-related circuit component (or referred to as a processing circuit), and the transceiver module 802 may be implemented by a transceiver or a transceiver-related circuit component.

For example, the processing module 801 may be configured to perform all operations, except sending and receiving operations, performed by the source secondary node in the embodiment shown in FIG. 4, for example, determining a fourth message, and/or configured to support another process of the technology described in this specification. The transceiver module 802 may be configured to perform all the receiving and sending operations performed by the source secondary node in the embodiment shown in FIG. 4, for example, step 401, and/or configured to support another process of the technology described in this specification.

The processing module 801 is configured to determine a fourth message. The fourth message includes an identifier of each candidate PSCell in a first candidate PSCell list and a first identifier corresponding to each candidate PSCell, the first candidate PSCell list includes at least one candidate PSCell configured by the communication apparatus 80 for a terminal, and the first identifier indicates a condition for changing a PSCell currently connected to the terminal to a candidate PSCell corresponding to the first identifier.

The transceiver module 802 is configured to send the fourth message to an MN.

In a possible implementation, the first identifier includes a measurement identifier and/or a conditional reconfiguration identifier.

In a possible implementation, the fourth message further includes first indication information, and the first indication information indicates that conditional PSCell change is triggered by the communication apparatus 80.

In a possible implementation, the transceiver module 802 is further configured to receive a sixth message from the MN. The sixth message indicates that the terminal receives a third message, the third message is a message sent by the MN to the terminal, the third message includes an identifier of each candidate PSCell in a second candidate PSCell list, a first identifier corresponding to each candidate PSCell, and radio resource configuration information corresponding to each candidate PSCell, and the first candidate PSCell list includes the second candidate PSCell list.

Alternatively, the processing module 801 is configured to determine a fourth message. The fourth message includes an identifier of each candidate PSCell in a first candidate PSCell list and a measurement identifier corresponding to each candidate PSCell, and the first candidate PSCell list includes at least one candidate PSCell configured by the communication apparatus 80 for a terminal.

The transceiver module 802 is configured to send the fourth message to an MN.

In a possible implementation, the fourth message further includes a conditional reconfiguration identifier corresponding to each candidate PSCell in the first candidate PSCell list.

In a possible implementation, the fourth message further includes first indication information, and the first indication information indicates that conditional PSCell change is triggered by the communication apparatus 80.

In a possible implementation, the transceiver module 802 is further configured to receive a sixth message from the MN. The sixth message indicates that the terminal receives a third message, the third message is a message sent by the MN to the terminal, the third message includes first information, the first information includes an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list includes the second candidate PSCell list.

When the communication apparatus 80 is configured to implement a function of the source SN, for another function that can be implemented by the communication apparatus 80, refer to related descriptions of the method embodiment shown in FIG. 4. Details are not described again.

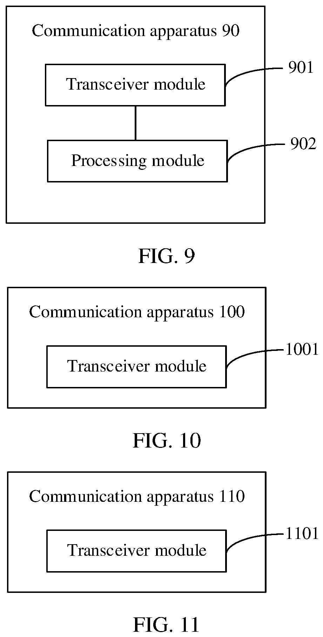

For example, when the functional modules are obtained through division in an integrated manner, FIG. 9 is a schematic diagram of a structure of a communication apparatus 90. For example, the communication apparatus 90 is configured to implement a function of a terminal. The communication apparatus 90 is, for example, the terminal in the embodiment shown in FIG. 3 or the embodiment shown in FIG. 4.

The communication apparatus 90 includes a transceiver module 901 and a processing module 902. For example, the communication apparatus 90 may be a terminal, or may be a chip used in the terminal, or another combined device or component having the foregoing function of the terminal. When the communication apparatus 90 is a terminal, the transceiver module 901 may be a transceiver. The transceiver may include an antenna, a radio frequency circuit, and the like. The processing module 902 may be a processor (or a processing circuit), for example, a baseband processor. The baseband processor may include one or more CPUs. When the communication apparatus 90 is a component having the function of the terminal, the transceiver module 901 may be a radio frequency unit, and the processing module 902 may be a processor (or a processing circuit), for example, a baseband processor. When the communication apparatus 90 is the chip system, the transceiver module 901 may be an input/output interface of the chip (for example, a baseband chip), and the processing module 902 may be a processor (or a processing circuit) of the chip system, and may include one or more central processing units. It should be understood that the transceiver module 901 in this embodiment of this application may be implemented by a transceiver or a transceiver-related circuit component, and the processing module 902 may be implemented by a processor or a processor-related circuit component (or referred to as a processing circuit).

For example, the transceiver module 901 may be configured to perform all the receiving and sending operations performed by the terminal in the embodiment shown in FIG. 3, for example, step 303, and/or configured to support another process of the technology described in this specification. The processing module 902 may be configured to perform all operations, other than sending and receiving operations, performed by the terminal in the embodiment shown in FIG. 3, for example, performs conditional PSCell change based on a third message, and/or configured to support another process of the technology described in this specification.

For another example, the transceiver module 901 may be configured to perform all the receiving and sending operations performed by the terminal in the embodiment shown in FIG. 4, for example, step 404, and/or configured to support another process of the technology described in this specification. The processing module 902 may be configured to perform all operations, other than sending and receiving operations, performed by the terminal in the embodiment shown in FIG. 4, for example, performs conditional PSCell change based on a third message, and/or configured to support another process of the technology described in this specification.

The transceiver module 901 is configured to receive a third message from an MN. The third message includes an identifier of each candidate PSCell in a second candidate PSCell list, a first identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source SN or the MN for the communication apparatus 90. The first identifier indicates a condition under which a PSCell currently connected to the communication apparatus 90 is a candidate PSCell corresponding to the first identifier. The source SN is an SN currently connected to the communication apparatus 90. The first indication information indicates that conditional PSCell change is triggered by the source SN, or indicates that conditional PSCell change is triggered by the MN.

The processing module 902 is configured to perform conditional PSCell change based on the third message.

In a possible implementation, the first identifier includes a measurement identifier and/or a conditional reconfiguration identifier.

In a possible implementation, the transceiver module 901 is further configured to send a fifth message to the MN. The fifth message indicates, to the MN, that the communication apparatus 90 receives the third message.

Alternatively, the transceiver module 901 is configured to receive a third message from an MN. The third message includes first information. The first information includes an identifier of each candidate PSCell in a second candidate PSCell list, a measurement identifier corresponding to each candidate PSCell, a conditional reconfiguration identifier corresponding to each candidate PSCell, radio resource configuration information corresponding to each candidate PSCell, and first indication information. All candidate PSCells included in the second candidate PSCell list are included in a first candidate PSCell list. The first candidate PSCell list includes at least one candidate PSCell configured by a source SN or the MN for the communication apparatus 90. The source SN is an SN currently connected to the communication apparatus 90. The first indication information indicates that conditional PSCell change is triggered by the source SN, or indicates that conditional PSCell change is triggered by the MN.

The processing module 902 is configured to perform conditional PSCell change based on the third message.

In a possible implementation, the transceiver module 901 is further configured to send a fifth message to the MN. The fifth message indicates, to the MN, that the communication apparatus 90 receives the third message.

When the communication apparatus 90 is configured to implement a function of the terminal, for another function that can be implemented by the communication apparatus 90, refer to related descriptions of the embodiment shown in FIG. 3 or the method embodiment shown in FIG. 4. Details are not described again.

For example, when the functional modules are obtained through division in an integrated manner, FIG. 10 is a schematic diagram of a structure of a communication apparatus 100. The communication apparatus 100 includes a transceiver module 1001.

For example, the communication apparatus 100 may be configured to implement a function of an MN. For example, the communication apparatus 100 is the MN in the embodiment shown in FIG. 5.

For example, the communication apparatus 100 may be an MN, or may be a chip used in the MN, or another combined device or component having the foregoing function of the MN. When the communication apparatus 100 is the MN, the transceiver module 1001 may be a transceiver, and the transceiver may include an antenna, a radio frequency circuit, and the like. When the communication apparatus 100 is a component having the foregoing function of the MN, the transceiver module 1001 may be a radio frequency unit. When the communication apparatus 100 is a chip system, the transceiver module 1001 may be an input/output interface of a chip (for example, a baseband chip). It should be understood that the transceiver module 1001 in this embodiment of this application may be implemented by a transceiver or a transceiver-related circuit component.

For example, the transceiver module 1001 may be configured to perform all the receiving and sending operations performed by the MN in the embodiment shown in FIG. 5, for example, step 501, step 502, and step 503, and/or configured to support another process of the technology described in this specification.

The transceiver module 1001 is configured to send a first message to a terminal. The first message indicates an addition/change condition and a radio resource configuration of each candidate PSCell in a PSCell list.

The transceiver module 1001 is further configured to receive a second message from the terminal. The second message indicates, to the communication apparatus 100, that the terminal receives the first message.

The transceiver module 1001 is further configured to send a third message to a first SN based on the second message. The third message indicates that the terminal receives the first message.

In a possible implementation, when the first message indicates the addition condition and the radio resource configuration of each candidate PSCell in the candidate PSCell list, the first SN is at least one of candidate SNs determined by the communication apparatus 100 for the terminal. When the first message indicates the change condition and the radio resource configuration of each candidate PSCell in the candidate PSCell list, the first SN is at least one of candidate SNs determined by the communication apparatus 100 or the source SN for the terminal and the source SN, and the source SN is an SN currently connected to the terminal.

When the communication apparatus 100 is configured to implement a function of the MN, for another function that can be implemented by the communication apparatus 100, refer to related descriptions of the method embodiment shown in FIG. 5. Details are not described again.

For example, when the functional modules are obtained through division in an integrated manner, FIG. 11 is a schematic diagram of a structure of a communication apparatus 110. The communication apparatus 110 includes a transceiver module 1101.

For example, the communication apparatus 110 may be configured to implement a function of a terminal. For example, the communication apparatus 110 is the terminal in the embodiment shown in FIG. 5.

For example, the communication apparatus 110 may be a terminal, or may be a chip used in the terminal, or another combined device or component having the foregoing function of the terminal. When the communication apparatus 110 is the terminal, the transceiver module 1101 may be a transceiver, and the transceiver may include an antenna, a radio frequency circuit, and the like. When the communication apparatus 110 is a component having the foregoing function of the terminal, the transceiver module 1101 may be a radio frequency unit. When the communication apparatus 110 is a chip system, the transceiver module 1101 may be an input/output interface of a chip (for example, a baseband chip). It should be understood that the transceiver module 1101 in this embodiment of this application may be implemented by a transceiver or a transceiver-related circuit component.

For example, the transceiver module 1101 may be configured to perform all the receiving and sending operations performed by the terminal in the embodiment shown in FIG. 5, for example, step 501 and step 502, and/or configured to support another process of the technology described in this specification.

The transceiver module 1101 is configured to send a first message from an MN. The first message indicates an addition/change condition and a radio resource configuration of each candidate PSCell in a PSCell list.

The transceiver module 1101 is further configured to send a second message to the MN. The second message indicates, to the MN, that the communication apparatus 110 receives the first message.

When the communication apparatus 110 is configured to implement a function of the terminal, for another function that can be implemented by the communication apparatus 110, refer to related descriptions of the method embodiment shown in FIG. 5. Details are not described again.

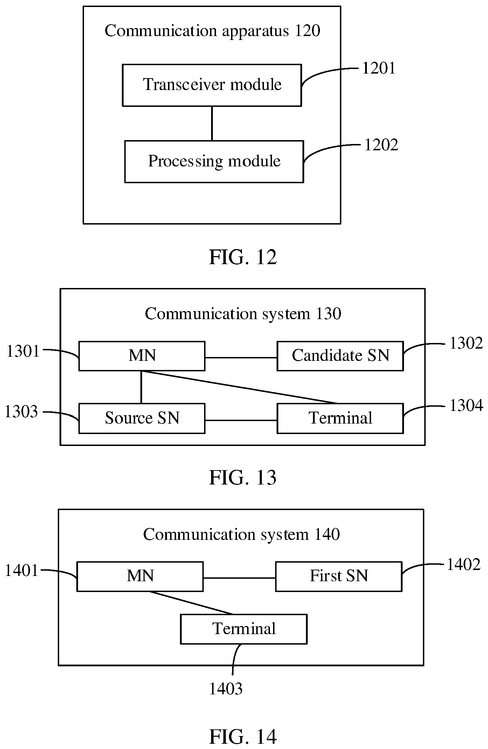

For example, when the functional modules are obtained through division in an integrated manner, FIG. 12 is a schematic diagram of a structure of a communication apparatus 120. For example, the communication apparatus 120 is configured to implement a function of a first SN. For example, the communication apparatus 120 is the first SN in the embodiment shown in FIG. 5.

The communication apparatus 120 includes a transceiver module 1201 and a processing module 1202. For example, the communication apparatus 120 may be a first SN, or may be a chip used in the first SN, or another combined device or component having the foregoing function of the first SN. When the communication apparatus 120 is the first SN, the transceiver module 1201 may be a transceiver. The transceiver may include an antenna, a radio frequency circuit, and the like. The processing module 1202 may be a processor (or a processing circuit), for example, a baseband processor. The baseband processor may include one or more CPUs. When the communication apparatus 120 is a component having the function of the first SN, the transceiver module 1201 may be a radio frequency unit, and the processing module 1202 may be a processor (or a processing circuit), for example, a baseband processor. When the communication apparatus 120 is the chip system, the transceiver module 1201 may be an input/output interface of the chip (for example, a baseband chip), and the processing module 1202 may be a processor (or a processing circuit) of the chip system, and may include one or more central processing units. It should be understood that the transceiver module 1201 in this embodiment of this application may be implemented by a transceiver or a transceiver-related circuit component, and the processing module 1202 may be implemented by a processor or a processor-related circuit component (or referred to as a processing circuit).

For example, the transceiver module 1201 may be configured to perform all the receiving and sending operations performed by the first SN in the embodiment shown in FIG. 5, for example, step 503, and/or configured to support another process of the technology described in this specification. The processing module 1202 may be configured to perform all operations, other than sending and receiving operations, performed by the terminal in the embodiment shown in FIG. 5, for example, determines, based on the third message, that the terminal receives the third message, and/or configured to support another process of the technology described in this specification.

The transceiver module 1201 receives a third message from an MN. The third message indicates that a terminal receives a first message, the first message indicates an addition/change condition and a radio resource configuration of each candidate PSCell in a PSCell list, the third message is determined by the MN based on a second message sent by the terminal, and the second message indicates, to the MN, that the terminal receives the first message.

The processing module 1202 is configured to determine, based on the third message, that the terminal receives the first message.

In a possible implementation, when the first message indicates the addition condition and the radio resource configuration of each candidate PSCell in the candidate PSCell list, the communication apparatus 120 is at least one of candidate SNs determined by the MN for the terminal. When the first message indicates the change condition and the radio resource configuration of each candidate PSCell in the candidate PSCell list, the communication apparatus 120 is at least one of candidate SNs determined by the MN or the source SN for the terminal and the source SN, and the source SN is an SN currently connected to the terminal.

When the communication apparatus 120 is configured to implement a function of the first SN, for another function that can be implemented by the communication apparatus 120, refer to related descriptions of the method embodiment shown in FIG. 5. Details are not described again.

FIG. 13 is a schematic composition diagram of a communication system. As shown in FIG. 13, the communication system 130 may include an MN 1301, a candidate SN 1302, a source SN 1303, and a terminal 1304. It should be noted that FIG. 13 is merely an example accompanying drawing, and network elements included in the communication system 130 shown in FIG. 13 and a quantity of the network elements are not limited in this embodiment of this application.

The MN 1301 has a function of the communication apparatus 60 shown in FIG. 6, and may be configured to send a first message to the candidate SN 1302, receive a second message from the candidate SN 1302, and send a third message to the terminal 1304.

The candidate SN 1302 has a function of the communication apparatus 70 shown in FIG. 7, and may be configured to receive the first message from the MN 1301, and send the second message to the MN 1301 based on the first message.

The source SN 1303 has a function of the communication apparatus 80 shown in FIG. 8, and may be configured to determine a fourth message, and send the fourth message to the MN 1301.

The terminal 1304 has a function of the communication apparatus 90 shown in FIG. 9, and may be configured to receive the third message from the MN 1301, and perform conditional PSCell change based on the third message.

It should be noted that all related content of the steps in the foregoing method embodiments may be cited in function descriptions of corresponding network elements in the communication system 130. Details are not described herein again.

FIG. 14 is a schematic composition diagram of a communication system. As shown in FIG. 14, the communication system 140 may include an MN 1401, a first SN 1402, and a terminal 1403. It should be noted that FIG. 14 is merely an example accompanying drawing, and network elements included in the communication system 140 shown in FIG. 14 and a quantity of the network elements are not limited in this embodiment of this application.

The MN 1401 has a function of the communication apparatus 100 shown in FIG. 10, and may be configured to send a first message to the terminal 1403, receive a second message from the terminal 1403, and send a third message to the first SN 1402 based on the second message.

The first SN 1402 has a function of the communication apparatus 110 shown in FIG. 11, and may be configured to receive the first message from the MN 1401, and send the second message to the MN 1401.

The terminal 1403 has a function of the communication apparatus 120 shown in FIG. 12, and may receive the third message from the MN 1401, and determine, based on the third message, that the terminal 1403 receives the first message.

It should be noted that all related content of the steps in the foregoing method embodiments may be cited in function descriptions of corresponding network elements in the communication system 140. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the module or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
sending, by a master base station, a first message to a candidate secondary base station, wherein the first message comprises an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier;
receiving, by the master base station, a second message from the candidate secondary base station, wherein the second message comprises an identifier of each candidate PSCell in a second candidate PSCell list, a first identifier corresponding to each candidate PSCell, and radio resource configuration information corresponding to each candidate PSCell, and the first candidate PSCell list comprises the second candidate PSCell list; and
sending, by the master base station, a third message to the terminal, wherein the third message comprises the identifier of each candidate PSCell in the second candidate PSCell list, the first identifier corresponding to each candidate PSCell, and the radio resource configuration information corresponding to each candidate PSCell.

2. The method according to claim 1, wherein the first identifier comprises a measurement identifier and/or a conditional reconfiguration identifier.

3. The method according to claim 1 or 2, wherein the method further comprises:
receiving, by the master base station, a fourth message from a source secondary base station, wherein the fourth message comprises the identifier of each candidate PSCell in the first candidate PSCell list and the first identifier corresponding to each candidate PSCell, and the first candidate PSCell list comprises at least one candidate PSCell configured by the source secondary base station for the terminal.

4. The method according to claim 3, wherein the third message further comprises first indication information, and the first indication information indicates that conditional PSCell change is triggered by the source secondary base station.

5. The method according to claim 1 or 2, wherein the first candidate PSCell list comprises at least one candidate PSCell configured by the master base station for the terminal, and the first identifier is determined by the master base station.

6. The method according to claim 5, wherein the third message further comprises second indication information, and the second indication information indicates that conditional PSCell change is triggered by the master base station.

7. A communication method, wherein the method comprises:
receiving, by a candidate secondary base station, a first message from a master base station, wherein the first message comprises an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier; and
sending, by the candidate secondary base station, a second message to the master base station based on the first message, wherein the second message comprises an identifier of each candidate PSCell in a second candidate PSCell list, a first identifier corresponding to each candidate PSCell, and radio resource configuration information corresponding to each candidate PSCell, and the first candidate PSCell list comprises the second candidate PSCell list.

8. The method according to claim 7, wherein the first identifier comprises a measurement identifier and/or a conditional reconfiguration identifier.

9. The method according to claim 7 or 8, wherein the method further comprises:
receiving, by the candidate secondary base station, a sixth message from the master base station, wherein the sixth message indicates that the terminal receives a third message, the third message is a message sent by the master base station to the terminal, and the third message comprises the identifier of each candidate PSCell in the second candidate PSCell list, the first identifier corresponding to each candidate PSCell, and the radio resource configuration information corresponding to each candidate PSCell.

10. A communication method, wherein the method comprises:
determining, by a source secondary base station, a fourth message, wherein the fourth message comprises an identifier of each candidate primary secondary cell PSCell in a first candidate PSCell list and a first identifier corresponding to each candidate PSCell, the first candidate PSCell list comprises at least one candidate PSCell configured by the source secondary base station for a terminal, and the first identifier indicates a condition for changing a PSCell currently connected to the terminal to a candidate PSCell corresponding to the first identifier; and
sending, by the source secondary base station, the fourth message to a master base station.

11. The method according to claim 10, wherein the first identifier comprises a measurement identifier and/or a conditional reconfiguration identifier.

12. The method according to claim 10 or 11, wherein the fourth message further comprises first indication information, and the first indication information indicates that conditional PSCell change is triggered by the source secondary base station.

13. The method according to any one of claims 10 to 12, wherein the method further comprises:
receiving, by the source secondary base station, a sixth message from the master base station, wherein the sixth message indicates that the terminal receives a third message, the third message is a message sent by the master base station to the terminal, the third message comprises an identifier of each candidate PSCell in a second candidate PSCell list, a first identifier corresponding to each candidate PSCell, and radio resource configuration information corresponding to each candidate PSCell, and the first candidate PSCell list comprises the second candidate PSCell list.

14. A communication method, wherein the method comprises:
sending, by a master base station, a first message to a candidate secondary base station, wherein the first message comprises an identifier of each candidate primary secondary cell PSCell in a first candidate PSCell list and a measurement identifier corresponding to each candidate PSCell;
receiving, by the master base station, a second message from the candidate secondary base station, wherein the second message comprises first information, the first information comprises an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list comprises the second candidate PSCell list; and
sending, by the master base station, a third message to a terminal, wherein the third message comprises the first information.

15. The method according to claim 14, wherein the method further comprises:
receiving, by the master base station, a fourth message from a source secondary base station, wherein the fourth message comprises the identifier of each candidate PSCell in the first candidate PSCell list and the measurement identifier corresponding to each candidate PSCell, and the first candidate PSCell list comprises at least one candidate PSCell configured by the source secondary base station for the terminal.

16. The method according to claim 15, wherein the first message further comprises a conditional reconfiguration identifier corresponding to each candidate PSCell in the first candidate PSCell list, and the fourth message further comprises the conditional reconfiguration identifier corresponding to each candidate PSCell in the first candidate PSCell list.

17. The method according to claim 15 or 16, wherein the third message further comprises first indication information, and the first indication information indicates that conditional PSCell change is triggered by the source secondary base station.

18. The method according to claim 14, wherein the first candidate PSCell list comprises at least one candidate PSCell configured by the master base station for the terminal, and the measurement identifier is determined by the master base station.

19. The method according to claim 18, wherein the third message further comprises second indication information, and the second indication information indicates that conditional PSCell change is triggered by the master base station.

20. A communication method, wherein the method comprises:
receiving, by a candidate secondary base station, a first message from a master base station, wherein the first message comprises an identifier of each candidate primary secondary cell PSCell in a first candidate PSCell list and a measurement identifier corresponding to each candidate PSCell; and
sending, by the candidate secondary base station, a second message to the master base station based on the first message, wherein the second message comprises first information, the first information comprises an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list comprises the second candidate PSCell list.

21. The method according to claim 20, wherein the first message further comprises a conditional reconfiguration identifier corresponding to each candidate PSCell in the first candidate PSCell list.

22. The method according to claim 20 or 21, wherein the method further comprises:
receiving, by the candidate secondary base station, a sixth message from the master base station, wherein the sixth message indicates that the terminal receives a third message, the third message is a message sent by the master base station to the terminal, and the third message comprises the first information.

23. A communication method, wherein the method comprises:
determining, by a source secondary base station, a fourth message, wherein the fourth message comprises an identifier of each candidate primary secondary cell PSCell in a first candidate PSCell list and a measurement identifier corresponding to each candidate PSCell, and the first candidate PSCell list comprises at least one candidate PSCell configured by the source secondary base station for a terminal; and
sending, by the source secondary base station, the fourth message to a master base station.

24. The method according to claim 23, wherein the fourth message further comprises a conditional reconfiguration identifier corresponding to each candidate PSCell in the first candidate PSCell list.

25. The method according to claim 23 or 24, wherein the fourth message further comprises first indication information, and the first indication information indicates that conditional PSCell change is triggered by the source secondary base station.

26. The method according to any one of claims 23 to 25, wherein the method further comprises:
receiving, by the source secondary base station, a sixth message from the master base station, wherein the sixth message indicates that the terminal receives a third message, the third message is a message sent by the master base station to the terminal, the third message comprises first information, the first information comprises an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list comprises the second candidate PSCell list.

27. A communication apparatus, wherein the communication apparatus comprises a transceiver module;
the transceiver module is configured to send a first message to a candidate secondary base station, wherein the first message comprises an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier;
the transceiver module is further configured to receive a second message from the candidate secondary base station, wherein the second message comprises an identifier of each candidate PSCell in a second candidate PSCell list, a first identifier corresponding to each candidate PSCell, and radio resource configuration information corresponding to each candidate PSCell, and the first candidate PSCell list comprises the second candidate PSCell list; and
the transceiver module is further configured to send a third message to the terminal, wherein the third message comprises the identifier of each candidate PSCell in the second candidate PSCell list, the first identifier corresponding to each candidate PSCell, and the radio resource configuration information corresponding to each candidate PSCell.

28. A communication apparatus, wherein the communication apparatus comprises a transceiver module;
the transceiver module is configured to receive a first message from a master base station, wherein the first message comprises an identifier of each candidate primary secondary cell PSCell in a first candidate PSCell list and a first identifier corresponding to each candidate PSCell, and the first identifier indicates a condition for changing a PSCell currently connected to a terminal to a candidate PSCell corresponding to the first identifier; and
the transceiver module is further configured to send a second message to the master base station based on the first message, wherein the second message comprises an identifier of each candidate PSCell in a second candidate PSCell list, a first identifier corresponding to each candidate PSCell, and radio resource configuration information corresponding to each candidate PSCell, and the first candidate PSCell list comprises the second candidate PSCell list.

29. A communication apparatus, wherein the communication apparatus comprises a processing module and a transceiver module;
the processing module is configured to determine a fourth message, wherein the fourth message comprises an identifier of each candidate primary secondary cell PSCell in a first candidate PSCell list and a first identifier corresponding to each candidate PSCell, the first candidate PSCell list comprises at least one candidate PSCell configured by the communication apparatus for a terminal, and the first identifier indicates a condition for changing a PSCell currently connected to the terminal to a candidate PSCell corresponding to the first identifier; and
the transceiver module is configured to send the fourth message to a master base station.

30. A communication apparatus, wherein the communication apparatus comprises a transceiver module and a processing module;
the transceiver module is configured to receive a third message from a master base station, wherein the third message comprises an identifier of each candidate primary secondary cell PSCell in a second candidate PSCell list, a first identifier corresponding to each candidate PSCell, radio resource configuration information corresponding to each candidate PSCell, and first indication information; all candidate PSCells comprised in the second candidate PSCell list are comprised in a first candidate PSCell list; the first candidate PSCell list comprises at least one candidate PSCell configured by a source secondary base station or the master base station for the communication apparatus; the first identifier indicates a condition under which a PSCell currently connected to the communication apparatus is a candidate PSCell corresponding to the first identifier; the source secondary base station is a secondary base station currently connected to the communication apparatus; and the first indication information indicates that conditional PSCell change is triggered by the source secondary base station, and/or indicates that conditional PSCell change is triggered by the master base station; and
the processing module is configured to perform conditional PSCell change based on the third message.

31. A communication apparatus, wherein the communication apparatus comprises a transceiver module;
the transceiver module is configured to send a first message to a candidate secondary base station, wherein the first message comprises an identifier of each candidate primary secondary cell PSCell in a first candidate PSCell list and a measurement identifier corresponding to each candidate PSCell;
the transceiver module is configured to receive a second message from the candidate secondary base station, wherein the second message comprises first information, the first information comprises an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list comprises the second candidate PSCell list; and
the transceiver module is configured to send a third message to a terminal, wherein the third message comprises the first information.

32. A communication apparatus, wherein the communication apparatus comprises a transceiver module;
the transceiver module is configured to receive a first message from a master base station, wherein the first message comprises an identifier of each candidate primary secondary cell PSCell in a first candidate PSCell list and a measurement identifier corresponding to each candidate PSCell; and
the transceiver module is further configured to send a second message to the master base station based on the first message, wherein the second message comprises first information, the first information comprises an identifier of each candidate PSCell in a second candidate PSCell list, a measurement identifier corresponding to each candidate PSCell, a conditional reconfiguration identifier corresponding to each candidate PSCell, and radio resource configuration information corresponding to each candidate PSCell, and the first candidate PSCell list comprises the second candidate PSCell list.

33. A communication apparatus, wherein the communication apparatus comprises a processing module and a transceiver module;
the processing module is configured to determine a fourth message, wherein the fourth message comprises an identifier of each candidate primary secondary cell PSCell in a first candidate PSCell list and a measurement identifier corresponding to each candidate PSCell, and the first candidate PSCell list comprises at least one candidate PSCell configured by the communication apparatus for a terminal; and
the transceiver module is configured to send the fourth message to a master base station.

34. A communication apparatus, wherein the communication apparatus comprises a transceiver module and a processing module;
the transceiver module is configured to receive a third message from a master base station, wherein the third message comprises first information; the first information comprises an identifier of each candidate primary secondary cell PSCell in a second candidate PSCell list, a measurement identifier corresponding to each candidate PSCell, a conditional reconfiguration identifier corresponding to each candidate PSCell, radio resource configuration information corresponding to each candidate PSCell, and first indication information; all candidate PSCells comprised in the second candidate PSCell list are comprised in a first candidate PSCell list; the first candidate PSCell list comprises at least one candidate PSCell configured by a source secondary base station or the master base station for the communication apparatus; the source secondary base station is a secondary base station currently connected to the communication apparatus; and the first indication information indicates that conditional PSCell change is triggered by the source secondary base station, or indicates that conditional PSCell change is triggered by the master base station; and
the processing module is configured to perform conditional PSCell change based on the third message.

35. A communication apparatus, comprising a processor, wherein the processor is coupled to a memory, the memory is configured to store a program or instructions, and when the program or the instructions are executed by the processor, the apparatus is enabled to perform the method according to any one of claims 1 to 6, or perform the method according to any one of claims 7 to 9, or perform the method according to any one of claims 10 to 13, or perform the method according to any one of claims 14 to 19, or perform the method according to any one of claims 20 to 22, or perform the method according to any one of claims 23 to 26.

36. A computer-readable medium, storing a computer program or instructions, wherein when the computer program or the instructions are executed, the computer is enabled to perform the method according to any one of claims 1 to 6, or perform the method according to any one of claims 7 to 9, or perform the method according to any one of claims 10 to 13, or perform the method according to any one of claims 14 to 19, or perform the method according to any one of claims 20 to 22, or perform the method according to any one of claims 23 to 26.
